(19) Europäisches Patentamt
European Patent Office
Office européen des brevets

(11) **EP 2 637 413 A1**

(12) **EUROPEAN PATENT APPLICATION**
published in accordance with Art. 153(4) EPC

(43) Date of publication:
**11.09.2013 Bulletin 2013/37**

(51) Int Cl.:
*H04N 13/02* (2006.01)      *H04N 13/04* (2006.01)

(21) Application number: **11838056.7**

(22) Date of filing: **02.11.2011**

(86) International application number:
**PCT/JP2011/075289**

(87) International publication number:
**WO 2012/060406 (10.05.2012 Gazette 2012/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2010 JP 2010248567**

(71) Applicant: **Sharp Kabushiki Kaisha
Osaka-shi, Osaka 545-8522 (JP)**

(72) Inventor: **KITAURA, Ryuhji
Osaka 545-8522 (JP)**

(74) Representative: **Müller - Hoffmann & Partner
Patentanwälte
Innere Wiener Strasse 17
81667 München (DE)**

(54) **DEVICE FOR CREATING STEREOSCOPIC IMAGE DATA, DEVICE FOR PLAYING BACK STEREOSCOPIC IMAGE DATA, AND FILE MANAGEMENT METHOD**

(57)   Conventional methods have been unable to display stereoscopic images that are safe and have a high degree of freedom because only one type of maximum parallax and one type of minimum parallax are transmitted with a 3-dimensional image. This stereoscopic image data creating device, this stereoscopic image data reproducing device, and this file management method are characterized by comprising: multiplexing 3D information that includes a plurality of sets of image data corresponding to each of a plurality of points of view, a first maximum parallax as the maximum value of a parallax determined geometrically from a mechanism of imaging means, a first minimum parallax representing a parallax at the position of a subject at the closet distance from the imaging means as the limit of the suitable parallax range from the mechanism of the imaging means, a second maximum parallax as the maximum value of the parallax of the actually generated stereoscopic image, and a second minimum parallax as the minimum value of the parallax of the actually generated stereoscopic image; handling the data as a single set of stereoscopic image data; and determining whether the parallax can be adjusted, a stereoscopic image can be displayed, or the like using the 3D information to allow a stereoscopic image to be displayed safer and in a more agreeable manner.

FIG. 1

**Description**

TECHNICAL FIELD

The present invention relates to a stereoscopic image data creating device, a stereoscopic image data reproducing device, and a file management method for having image data accompanied with attribute information at the time of creating image data for performing three-dimensional display.

BACKGROUND OF THE INVENTION

Conventionally, various methods for displaying a three- dimensional image have been proposed. Of these, a method generally used is called a "binocular method" that uses binocular parallax. This method allows stereoscopic view to be performed by preparing a left- eye image and a right- eye image having binocular parallax and projecting each image on the left and right eyes separately. In description below, the aforementioned images are referred to as a left- eye image and a right- eye image, respectively. Additionally, 3D and 2D are used as terms meaning three- dimensional or stereoscopic and two- dimensional, respectively, and image data for stereoscopic view is referred to as 3D image data while normal two- dimensional image data is referred to as 2D image data.

Note that, Non Patent Literature 1 describes safety guidelines for creating a 3D image using binocular parallax. In a 3D image using binocular parallax, stereoscopic sense of extrusion and depth can be controlled by adjusting parallax, however, people with a smaller interpupillary distance or children feel a stereoscopic effect strongly even if the parallax is the same. Moreover, in the case of displaying in the retracted direction on a display, creating parallax which exceeds the interpupillary distance of both eyes on the display shall be avoided as much as possible because our eyes do not open outward. Therefore, it is stated in the safety guidelines that the interpupillary distance is around 5 cm for a child who is 6 years of age, and this value is used as a representative value for children considering safety according to results of a survey on the interpupillary distance.

A frame sequential method, a parallax barrier method, and the like are herein proposed as representative binocular methods, and will be described in detail based on conceptual diagrams thereof.

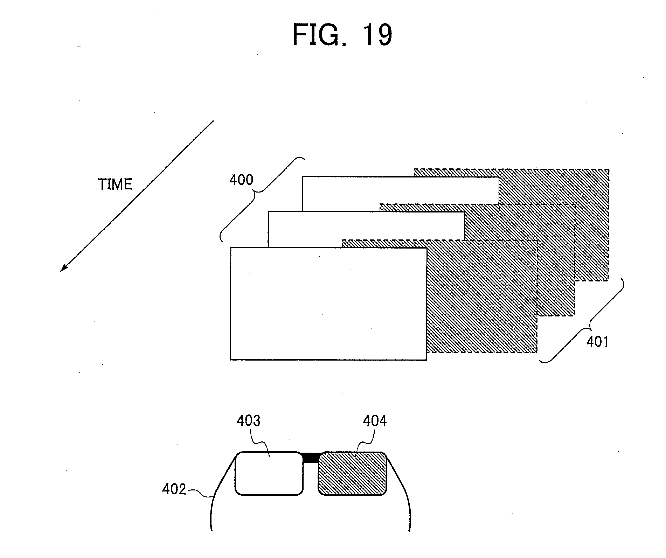

Fig. 19 is a conceptual diagram for explaining a frame sequential method. Generally, the frame sequential method is comprised of a display which switches image frames at high speed for displaying, and active shutter glasses capable of controlling lens shutters of glasses in synchronization with displaying on the display and opening/closing right and left lenses alternately. In Fig. 19, a left-eye image 400 and a right-eye image 401 are displayed on a display alternately in terms of time at high speed. In accordance with this timing of displaying, active shutter glasses 402 perform control so that a left-eye lens shutter 403 transmits light and a right-eye lens shutter 404 shuts light, respectively, when the left-eye image 400 is displayed. Conversely, control is performed so that the right-eye lens shutter 404 transmits light and the left-eye lens shutter 403 shuts light, respectively, when the right-eye image 401 is displayed. Whereby, video images in accordance with parallax of right and left eyes are displayed for the respective eyes in time division, thus allowing an observer to observe a stereoscopic vision.

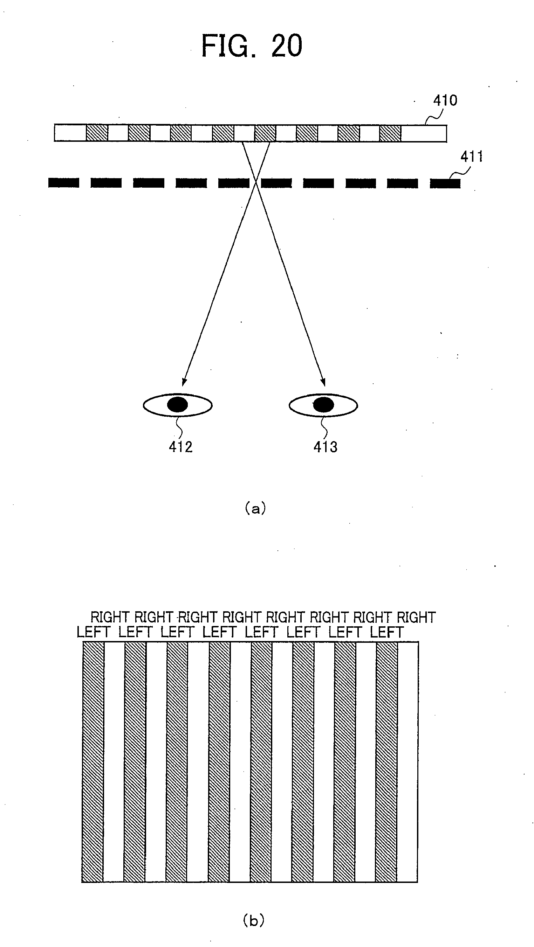

Further, Fig. 20 is a conceptual diagram for explaining a parallax barrier method. Fig. 20 (a) is a diagram indicating a principle of generating parallax. Whereas, Fig. 20 (b) is a diagram showing an example of a screen which is displayed by the parallax barrier method. In a configuration shown in Fig. 20 (a) , an image configured by a left- eye image and a right- eye image that are arranged alternately at every other pixel in a horizontal direction as shown in Fig. 20 (b) , is displayed on an image display panel 410, and a parallax barrier 411 having slits at intervals smaller than those of pixels in the same viewpoint is installed on a viewpoint side at front of the image display panel 410, thereby allowing observation of the left- eye image only by a left eye 412 and observation of the right- eye image only by a right eye 413 so as to allow stereoscopic view.

Further, Patent Literature 1 discloses, as shown in Fig. 21, a method in which, together with two raw images constituting a stereo pair photographed by an imaging device 501 and an imaging device 502, maximum parallax of an imaging mechanism as parallax of an object 503 at a position 505 which is nearest from the imaging devices at the time of photographing and minimum parallax of an imaging mechanism of an object 504 at a position 506 which is farthest from the imaging devices at the time of photographing are recorded as a parallax range on a transmitting device side, the transmitting device transmits the parallax range together with the raw images to an receiving device, and on the receiving device side, these parallax are subjected to rescaling to be displayed in a stereoscopic display, thereby remapping a position at which a transmitted three- dimensional image is stereoscopically displayed to visual space allowing a viewer to view a stereoscopic vision comfortably. Moreover, it is disclosed in the literature that, for the parallax range transmitted together with the raw images from the transmitting device side, a maximum parallax value and a minimum parallax value obtained on the transmitting device side by searching a corresponding point from the raw images may be used.

PRIOR ART DOCUMENT

PATENT DOCUMENTS

[Patent Document 1] Japanese Unexamined Patent Application Publication (Translation of PCT Application) No. 2009- 516447

NON PATENT DOCUMENTS

[Non Patent Document 1] "3DC Safety Guidelines"; [online] ; April 20, 2010; 3D Consortium Safety/ Guidelines Section; [retrieved on September 15, 2010] ; Internet <URL: http: //www. 3dc.gr.jp/jp/ scmt_ wg_ rep/ 3dc_ guideJ_ 20100420.p df>

SUMMARY OF THE INVENTION

PROBLEM TO BE SOLVED BY THE INVENTION

However, in a method of the above- described Patent Literature 1, from the transmitting device side to the receiving device side, a set of the maximum parallax value and the minimum parallax value of the parallax range is transmitted together with raw image data, while on the receiving device side, according to the received set of the maximum parallax value and the minimum parallax value of the parallax range, remapping is performed to create a display image. Such a method has been problematic that, since only one type for each of a value of the maximum parallax and the minimum parallax is transmitted, in the case that the receiving device receives only maximum parallax and minimum parallax by searching a corresponding point, and in the case that these values include errors, parallax adjustment based on this parallax range causes a possibility of displaying with improper parallax.

In addition, conversely, when only imaging mechanism information is received and parallax is adjusted based on maximum parallax and minimum parallax calculated from the received imaging mechanism information, in terms of a mechanism, parallax safely falls within a larger parallax range, but there has been a problem that an adjustable parallax range is reduced, and thus losing flexibility in changing a presented position of a stereoscopic vision to be stereoscopically displayed.

Further, there has been a problem that, depending on a real parallax value of a stereoscopic vision which is photographed, parallax is changed in a direction opposite to a desired direction for adjustment, and there is a possibility that adjustment opposite to intended parallax adjustment is performed.

The present invention has been devised to solve problems as described above, and an object thereof is to provide a stereoscopic image data creating device, a stereoscopic image data reproducing device, and a file management method for having image data for three-dimensional display with versatility as well as allowing presentation of a stereoscopic vision having safer and more comfortable parallax on a reproducing device side.

MEANS FOR SOLVING THE PROBLEM

A stereoscopic image data creating device of the present invention is a stereoscopic image data creating device for creating image data in a predetermined file format from a plurality of image data corresponding to each of a plurality of viewpoints, comprising: a 3D information creating means for creating and outputting 3D information by using at least one or more maximum parallax or minimum parallax among a first maximum parallax, a second maximum parallax, a first minimum parallax, and a second minimum parallax which are input, wherein the first maximum parallax is a maximum value of parallax geometrically obtained from a mechanism of the imaging means, the first minimum parallax is a parallax which falls within a predetermined parallax range from the mechanism of the imaging means and is at a position nearest from the imaging means, the second maximum parallax is a maximum value of parallax between a left-eye image and a right-eye image of a stereoscopic image, and the second minimum parallax is a minimum value of parallax between the left-eye image and the right-eye image of the stereoscopic image; and a multiplexing means for multiplexing the 3D information and the image data to create stereoscopic image data in a predetermined file format.

Otherwise, a stereoscopic image data creating device of the present invention is a stereoscopic image data creating device for creating image data in a predetermined file format from a plurality of image data corresponding to each of a plurality of viewpoints, comprising: a 3D information creating means for creating and outputting 3D information by using at least one or more maximum parallax or minimum parallax among a first maximum parallax, a second maximum parallax, a first minimum parallax, and a second minimum parallax which are input, wherein the first maximum parallax is a maximum value of parallax geometrically obtained from a mechanism of imaging means, the first minimum parallax is a parallax which falls within a predetermined parallax range from the mechanism of the imaging means and is at a position nearest from the imaging means, the second maximum parallax is a maximum value of parallax between a left-eye image and a right- eye image of a stereoscopic image, and the second minimum parallax is a minimum value of parallax between the left- eye image and the right- eye image of the stereoscopic image; an image compression encoding means for performing compression encoding on the input plurality of image data to output compressed image data; and a multiplexing means for multiplexing the 3D information and the compressed image data to create stereoscopic image data in a predetermined file format.

Further, the stereoscopic image data in the predetermined file format includes the image data in n viewpoints as the plurality of viewpoints where n is three or more.

Further, when 3D information is created from the first maximum parallax, the second maximum parallax, the first minimum parallax, and the second minimum parallax, the 3D information creating means generates parallax unit information that indicates units of the first maximum parallax, the second maximum parallax, the first minimum parallax, and the second minimum parallax, while the stereoscopic image data in the predetermined file format includes the parallax unit information.

Further, the parallax unit information has a feature that a unit of the first maximum parallax, the second maximum parallax, the first minimum parallax, and the second minimum parallax is any of a pixel unit, a sub- pixel unit, a unit of length, a unit of distance, or percentage to a width of an entire image.

Further, when 3D information is created from the first maximum parallax, the second maximum parallax, the first minimum parallax, and the second minimum parallax, the 3D information creating means generates parallax target image information indicating, from which two viewpoint image data in combination among the plurality of image data, the first maximum parallax, the second maximum parallax, the first minimum parallax, and the second minimum parallax are obtained, and the stereoscopic image data in the predetermined file format includes the parallax target image information.

Otherwise, a stereoscopic image data reproducing device of the present invention is a stereoscopic image data reproducing device for reproducing a plurality of image data corresponding to each of a plurality of viewpoints from image data in a predetermined file format, comprising: a demultiplexing means for demultiplexing, from the file format, image data and 3D information indicating at least one or more maximum parallax or minimum parallax among first maximum parallax as a maximum value of parallax geometrically obtained from a mechanism of imaging means, second maximum parallax as a maximum value of parallax between a left- eye image and a right- eye image of a stereoscopic image, first minimum parallax which falls within a predetermined parallax range from the mechanism of the imaging means and is parallax at a position nearest from the imaging means, and second minimum parallax as a minimum value of parallax between the left- eye image and the right- eye image of the stereoscopic image; a 3D information analyzing means for analyzing the 3D information; and a stereoscopic intensity converting means for adjusting parallax for the image data, wherein the 3D information analyzing means analyzes the 3D information, and the stereoscopic intensity converting means uses at least one or more maximum parallax or minimum parallax among the first maximum parallax, the second maximum parallax, the first minimum parallax, and the second minimum parallax to adjust parallax of the image data for reproduction.

A stereoscopic image data reproducing device of the present invention is a stereoscopic image data reproducing device for reproducing a plurality of image data corresponding to each of a plurality of viewpoints from image data in a predetermined file format, comprising: a demultiplexing means for demultiplexing, from the file format, compressed image data and 3D information indicating at least one or more maximum parallax or minimum parallax among first maximum parallax as a maximum value of parallax geometrically obtained from a mechanism of imaging means, second maximum parallax as a maximum value of parallax between a left-eye image and a right-eye image of a stereoscopic image, first minimum parallax which falls within a predetermined parallax range from the mechanism of the imaging means and is parallax at a position nearest from the imaging means, and second minimum parallax as a minimum value of parallax between the left-eye image and the right-eye image of the stereoscopic image; a 3D information analyzing means for analyzing the 3D information; an image decoding means for decoding the compressed image data; and a stereoscopic intensity converting means for adjusting parallax for image data in which the compressed image data is decoded, wherein the 3D information analyzing means analyzes the 3D information, and the stereoscopic intensity converting mean uses at least one or more maximum parallax or minimum parallax among the first maximum parallax, the second maximum parallax, the first minimum parallax, and the second minimum parallax to adjust parallax of the image data for reproduction.

Further, in the case of analyzing information indicating the first maximum parallax, the second maximum parallax, the first minimum parallax, and the second minimum parallax, the 3D information analyzing means analyzes parallax unit information indicating units of the first maximum parallax, the second maximum parallax, the first minimum parallax, and the second minimum parallax, and uses the analyzed parallax unit information to analyze information indicating the first maximum parallax, the second maximum parallax, the first minimum parallax, and the second minimum parallax.

Further, the 3D information includes parallax target image information indicating, from which two viewpoint image data in combination among the plurality of image data, the first maximum parallax, the second maximum parallax, the first minimum parallax, and the second minimum parallax are obtained, and the 3D information analyzing means analyzes the parallax target image information, while the stereoscopic intensity converting means adjusts parallax for the image data indicated by the parallax target image information.

Further, in the case of adjusting parallax for the image data, the stereoscopic intensity converting means compares the magnitude of the first maximum parallax to that of the second maximum parallax, and when the second maximum parallax is larger than the first maximum parallax, judges that a value of the second maximum parallax is inappropriate, and adjusts parallax based on the first maximum parallax.

It is preferable that in the case of adjusting parallax for the image data, the stereoscopic intensity converting means compares the magnitude of the first minimum parallax to that of the second minimum parallax, and when the second minimum parallax is smaller than the first minimum parallax, adjusts parallax so that a value of the first minimum parallax becomes a value of the second minimum parallax.

It is preferable that in the case of adjusting parallax for the image data, the stereoscopic intensity converting means compares the magnitude of the first minimum parallax to that of the second minimum parallax, and when the second minimum parallax is smaller than the first minimum parallax, reduces and displays the image data so that a value of the first minimum parallax becomes a value of the second minimum parallax.

It is preferable that in the case of adjusting parallax for the image data, the stereoscopic intensity converting means compares the magnitude of the first minimum parallax to that of the second minimum parallax, and when the second minimum parallax is smaller than the first minimum parallax, judges that a value of the second minimum parallax is inappropriate to stop stereoscopic display, and displays in 2D, or performs 2D-3D conversion for image data in a viewpoint to perform 3D display.

It is preferable that in the case of adjusting parallax for the image data, the stereoscopic intensity converting means compares the magnitude of the first minimum parallax to that of the second minimum parallax, and when the second minimum parallax is smaller than the first minimum parallax, judges that a value of the second minimum parallax is inappropriate, and performs 2D-3D conversion on image data in any one viewpoint among the image data to perform 3D display.

It is preferable that in the case of adjusting parallax for the image data, the stereoscopic intensity converting means compares the magnitude of the first maximum parallax to that of the second maximum parallax, and when the second maximum parallax is smaller than the first maximum parallax, adjusts parallax based on a value of the second maximum parallax.

It is preferable that in the case of adjusting parallax for the image data, the stereoscopic intensity converting means compares the magnitude of the first minimum parallax to that of the second minimum parallax, and when the second minimum parallax is larger than the first minimum parallax, adjusts parallax based on a value of the second minimum parallax.

It is preferable that the 3D information analyzing means analyzes the parallax target image information, and the stereoscopic intensity converting means adjusts parallax for the image data indicated by the parallax target image information.

A file management method of the present invention is a file management method of managing 3D information as attribute information for stereoscopic display with image data, wherein the 3D information is comprised of parallax target image information indicating a combination of viewpoint images, parallax unit information indicating units of first and second maximum parallax and first and second minimum parallax, first maximum parallax, second maximum parallax, first minimum parallax, second minimum parallax, and an assumed display size indicating a size of a display for stereoscopic display of the image data.

Further, the 3D information includes a parallax recording feasibility flag indicating whether parallax information of each of the first and second maximum parallax and the first and second minimum parallax is recorded in the 3D information.

Further, a file to be managed is comprised of a file header, the 3D information, management information to be used for recording information which is not directly related to a three- dimensional image, and the image data, and the file header, the 3D information, the management information, and the image data are arranged from the head of the file in an order of the file header, the 3D information, the management information, and the image data.

Further, a file to be managed is comprised of the 3D information, management information to be used for recording information which is not directly related to a three- dimensional image, a file header, and the image data, and the 3D information, the management information, the file header, and the image data are arranged from the head of the file in an order of the 3D information, the management information, the file header, and the image data.

Further, the image data is comprised of both of left-eye image data and right-eye image data.

It is preferable that the image data of a first file to be managed is left-eye image data, the image data of a second file to be managed is right-eye image data, and the first file and the second file are a set of image data for a left eye and a right eye for forming a 3D image, and managed in a same dedicated folder.

It is preferable that the image data of the first file to be managed is left-eye image data, the image data of the second file to be managed is right-eye image data, and the first file and the second file are a set of image data for a left eye and a right eye for forming a 3D image, which is managed by providing a file name with an index so as to be distinguished from the other set of image data.

It is preferable that the image data of the first file to be managed is left-eye image data, the image data of the second file to be managed is right-eye image data, and a third file to be managed is a 3D management information file which stores 3D management information indicating that the first file and the second file are a set of image data for a left eye and a right eye for forming a 3D image.

It is preferable that the 3D management information file is a metafile and manages a name of the first file and a name of the second file indicating a set of image data for a left eye and a right eye for forming a 3D image by describing them in the metafile.

It is preferable that a file to be managed is comprised of a first file header, first 3D information, first management information, first image data, a second file header, second 3D information, second management information, and second image data, in which the first file header, the first 3D information, the first management information, the first image data, the second file header, the second 3D information, the second management information, and the second image data are arranged from the head of the file in an order of the first file header, the first 3D information, the first management information, the first image data, the second file header, the second 3D information, the second management information, and the second image data, where the first image data and the second image data are a set of image data for a left eye and a right eye for forming a 3D image.

It is preferable that a file to be managed is comprised of a file header, first 3D information, first management information, first image data, second 3D information, second management information, and second image data, in which the file header, the first 3D information, the first management information, the first image data, the second 3D information, the second management information, and the second image data are arranged from the head of the file in an order of the file header, the first 3D information, the first management information, the first image data, the second 3D information, the second management information, and the second image data, where the first image data and the second image data are a set of image data for a left eye and a right eye for forming a 3D image.

It is preferable that a file to be managed is comprised of third 3D information, third management information, a first file header, first 3D information, first management information, first image data, a second file header, second 3D information, second management information, and second image data, in which the third 3D information, the third management information, the first file header, the first 3D information, the first management information, the first image data, the second file header, the second 3D information, the second management information, and the second image data are arranged from the head of the file in an order of the third 3D information, the third management information, the first file header, the first 3D information, the first management information, the first image data, the second file header, the second 3D information, the second management information, and the second image data, where the first image data and the second image data are a set of image data for a left eye and a right eye for forming a 3D image, the third 3D information includes 3D information in a common part of the first and second image data, the first 3D information includes individual 3D information of the first image data, and the second 3D information includes individual 3D information of the second image data.

It is preferable that a file to be managed is comprised of third 3D information, third management information, a file header, first 3D information, first management information, first image data, second 3D information, second management information, and second image data, in which the third 3D information, the third management information, the file header, the first 3D information, the first management information, the first image data, the second 3D information, the second management information, and the second image data are arranged from the head of the file in an order of the third 3D information, the third management information, the file header, the first 3D information, the first management information, the first image data, the second 3D information, the second management information, and the second image data, where the first image data and the second image data are a set of image data for a left eye and a right eye for forming a 3D image, the third 3D information includes 3D information in a common part of the first and second image data, the first 3D information includes individual 3D information of the first image data, and the second 3D information includes individual 3D information of the second image data.

It is preferable that a file to be managed includes a plurality of viewpoint image information comprised of a file header, 3D information, management information, and viewpoint image data created for each different viewpoint image data, and the plurality of different viewpoint image information are repeatedly arranged from the head of the file in an order of the file header, the 3D information, the management information, and the viewpoint image data.

It is preferable that a file to be managed stores common information of 3D information of the plurality of viewpoint image information which are created for each of a plurality of viewpoint image data, management information of an entire file, and the plurality of viewpoint image information created for each of the plurality of viewpoint image data, in which the common information of 3D information, the management information of the entire file, and the plurality of viewpoint image information are arranged from the head of the file in an order of the common information of 3D information, the management information of the entire file, and the plurality of viewpoint image information, and the 3D information of the viewpoint image information which is created for each of the plurality of viewpoint image data includes individual 3D information created for each viewpoint image data.

EFFECTS OF THE INVENTION

According to the stereoscopic image data creating device, the stereoscopic image data reproducing device, and the file management method of the present invention, it is possible to perform parallax adjustment suited to a display size to be displayed safely and appropriately with higher flexibility.

BRIEF DESCRIPTION OF DRAWINGS

[Fig. 1] Fig. 1 is a block diagram showing a schematic configuration of a stereoscopic image data creating device according to a first embodiment of the present invention.
[Fig. 2] FIG. 2 is a diagram explaining parallax of a stereoscopic image.
[Fig. 3] Fig. 3 is a diagram explaining stereography by a parallel viewing method.
[Fig. 4] Fig. 4 is an example of a stereographic image by the parallel viewing method.
[Fig. 5] Fig. 5 is a diagram explaining stereography by a cross-eyed viewing method.
[Fig. 6] Fig. 6 is a flowchart on an operation of the stereoscopic image data creating device according to the first embodiment of the present invention.
[Fig. 7] Fig. 7 is a block diagram showing a schematic configuration of parallax calculating means of the stereoscopic image data creating device according to the first embodiment of the present invention.
[Fig. 8] Fig. 8 is an example of left-eye image data and right-eye image data before performing a parallax shift.
[Fig. 9] Fig. 9 is an example of left-eye image data and right-eye image data after performing a parallax shift.
[Fig. 10] Fig. 10 is a diagram showing an example of 3D information.
[Fig. 11] Fig. 11 is a diagram showing an example of a file format for recording multiplexed data.
[Fig. 12] Fig. 12 is a diagram showing an example using an existing file format at the time of recording multiplexed data.
[Fig. 13] Fig. 13 is a diagram showing an example using a new file format at the time of recording multiplexed data.
[Fig. 14] Fig. 14 is a block diagram showing a schematic configuration of a stereoscopic image data reproducing device according to the first embodiment of the present invention.
[Fig. 15] Fig. 15 is a block diagram showing a schematic configuration of the stereoscopic image data creating device according to a second embodiment of the present invention.
[Fig. 16] Fig. 16 is a block diagram showing a schematic configuration of parallax calculating means of the stereoscopic image data creating device according to the second embodiment of the present invention.
[Fig. 17] Fig. 17 is a diagram showing an example of a file format for recording multiplexed data.
[Fig. 18] Fig. 18 is a block diagram showing a schematic configuration of the stereoscopic image data reproducing device according to the second embodiment of the present invention.
[Fig. 19] Fig. 19 is a conceptual diagram for explaining a conventional frame sequential method.
[Fig. 20] Fig. 20 is a conceptual diagram for explaining a conventional parallax barrier method.

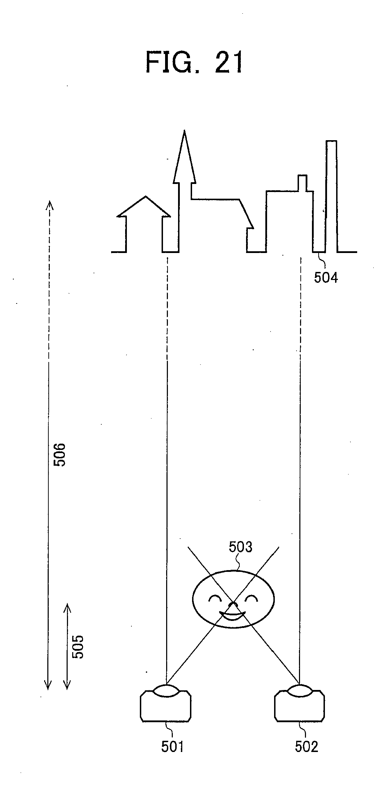

[Fig. 21] Fig. 21 is a diagram illustrating a conventional imaging mechanism for imaging a near object and a distant object.

PREFERRED EMBODIMENTS OF THE INVENTION

Hereinafter, description will be given in detail for preferred embodiments of a stereoscopic image data creating device, a stereoscopic image data reproducing device and a file management method according to the present invention with reference to the accompanying drawings. Additionally, in the description below, like numerals represent like elements even in configurations of various drawings, which description will be thus omitted.

[EXAMPLE 1]

Description will be given for a stereoscopic image data creating device according to a first embodiment with reference to drawings.

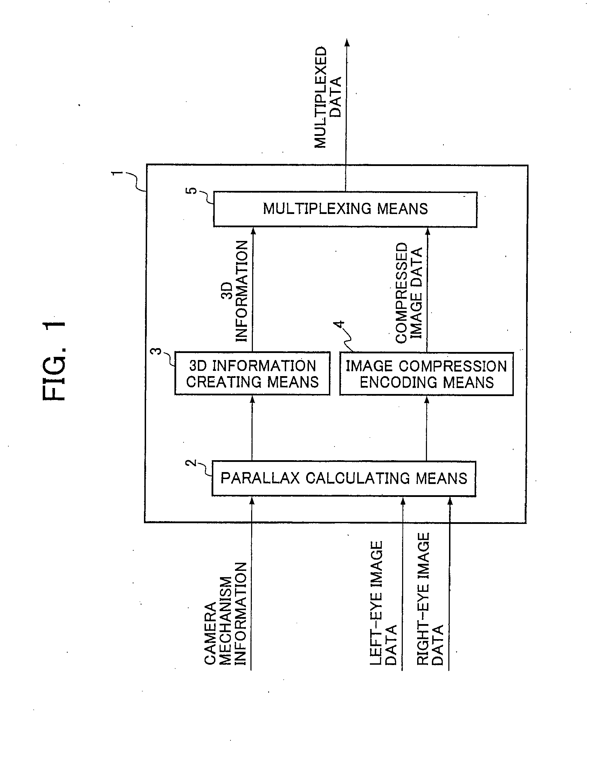

Fig. 1 is a block diagram showing a schematic configuration of a stereoscopic image data creating device according to the first embodiment of the present invention. In Fig. 1, a stereoscopic image data creating device 1 is comprised of parallax calculating means 2, 3D information creating means 3, image compression encoding means 4 and multiplexing means 5. The parallax calculating means 2 takes in camera mechanism information, left-eye image data and right-eye image data that are input, and outputs first parallax information obtained by geometric calculation from the camera mechanism information, second parallax information obtained by searching a corresponding point with use of the left-eye image data and the right-eye image data, parallax calculation viewpoint information indicating that parallax is calculated from which viewpoint image, the left-eye image data and the right-eye image data. The 3D information creating means 3 takes in the parallax calculation viewpoint information, the first parallax information and the second parallax information, creates and outputs 3D information from the input parallax calculation viewpoint information, first parallax information and second parallax information. The image compression encoding means 4 takes in the left-eye image data and the right-eye image data, and performs compression encoding for the input image data to create and output compressed image data. The multiplexing means 5 takes in the 3D information and compressed image data which are input, and multiplexes the input 3D information and compressed image data to create and output multiplexed data. In this embodiment, the first parallax information and the second parallax information are composed of maximum parallax and minimum parallax, respectively. Next, description will be given for the maximum parallax and the minimum parallax.

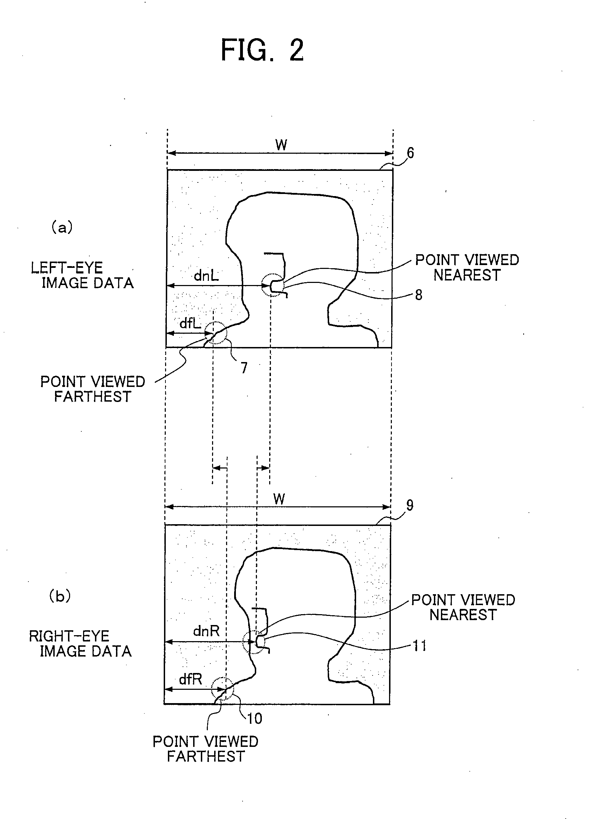

Fig. 2 is a diagram explaining parallax of a stereoscopic image. Fig. 2(a) shows a left-eye image data 6 with a farthest point 7 as a part viewed farthest and a nearest point 8 as a point viewed nearest at the time of stereoscopic display. Further, Fig. 2(b) shows a right-eye image data 9, in which a farthest point 10 as a part viewed farthest and a nearest point 11 as a point viewed nearest at the time of stereoscopic display are provided. At the time, where dfL as a distance to the farthest point 7 and dnL as a distance to the nearest point 8 from a left end of the left-eye image data 6 are provided, while dfR as a distance to the farthest point 10 and dnR as a distance to a left nearest point 11 from a left end of the right-eye image data 9 are provided, to define parallax in a part viewed farthest from an observer as maximum parallax at the time of stereoscopic display with use of the right-eye image data 9, the value is obtained as dfR - dfL. Similarly, where parallax between parts viewed nearest from an observer at the time of stereoscopic display with use of the left-eye image data 6 and the right-eye image data 9 is defined as minimum parallax, the value is obtained as dnR - dnL.

Next, description will be given for the first parallax information. The first parallax information is obtained by geometric calculation from camera mechanism information such as information on an orientation as well as arrangement and an angle of view of a lens for a camera used for photographing, a value of which depends on a point whether a camera photographing method is a parallel or cross- eyed viewing method, and an angle of view of a camera in the case of the cross- eyed viewing method. In the embodiment, the first parallax information is comprised of first maximum parallax as parallax to a background at infinite distance with maximum physical parallax, and first minimum parallax as parallax in the case of setting an object having a recommended camera- specific photographing distance so as to have a position capable of physically approaching a camera as well as a parallax value allowing a comfortable stereoscopic view, similarly from camera mechanism information.

First, description will be given for a method of obtaining the first parallax information in photographing by the parallel viewing method.

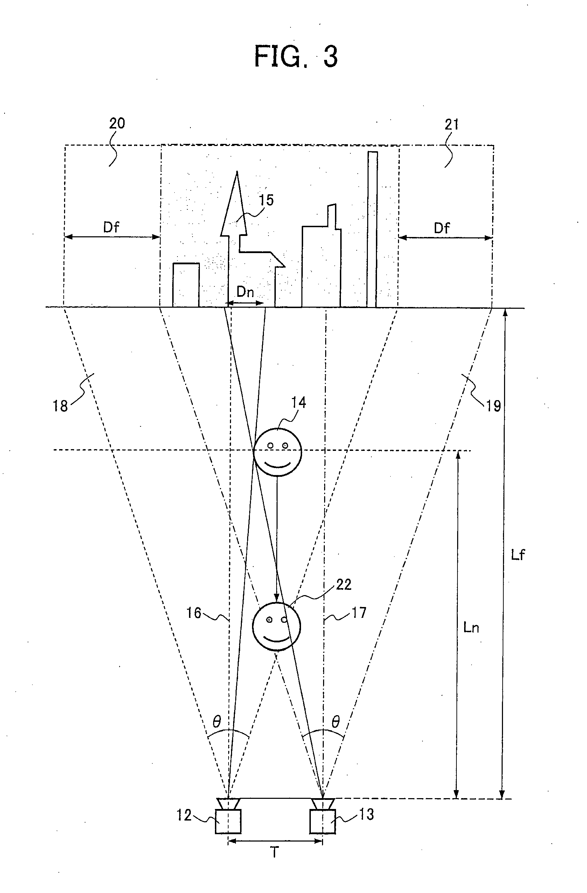

Fig. 3 is a diagram explaining stereography by the parallel viewing method. In Fig. 3, with a camera 12 and a camera 13 whose optical axes are set parallel to each other in a vertical direction and a horizontal direction, an object 14 as a near view and a background 15 as a distant view are photographed. In the diagram, the camera 12 and the camera 13 have the same specification. A base line length of a camera as a distance between an optical axis 16 of the camera 12 and an optical axis 17 of the camera 13 is T, and an angle of view of each of the camera 12 and the camera 13 is $\theta$. Further, coverage of the camera 12 is provided as coverage 18 and coverage of the camera 13 is provided as coverage 19. The camera 12 photographs a photographed image 20 and the camera 13 photographs a photographed image 21, respectively. In the diagram, the magnitude of parallax Df of the background 15 for the photographed image 20 and the photographed image 21 is the same as the size of the base line length T. However, when the background 15 is located far enough from the cameras 12 and 13 as it is approximately estimated as infinity, it is possible to approximate the magnitude of the parallax Df to be 0 because the coverage becomes very wide. Therefore, in photographing by the parallel viewing method, the first maximum parallax constituting the first parallax information is 0.

Moreover, description will be given for the way of obtaining the first minimum parallax constituting the first parallax information in photographing by the parallel viewing method. In photographing by the parallel viewing method, a position of an object from a camera allowing photographing as a stereoscopic vision is controlled by the base line length T and an angle of view $\theta$. The camera's angle of view $\theta$ as shown in Fig. 3 affects the coverage 18 and the coverage 19, while the base line length T affects the size of an area where the coverage 18 and the coverage 19 intersect. A parallax value of the object 14 for a distance from a position of a base line length between the camera 12 and the camera 13 to the object 14 is uniquely determined according to a distance from the base line length between the cameras to the object, the size of the base line length as a camera mechanism and the angle of view $\theta$.

For example, a similarity relation of a formula (1) is obtained where a distance to the object 14 is Ln and a distance to the background 15 is Lf from the base line length between the camera 12 and the camera 13, and parallax of the object 14 in a photographed image is Dn.

$$(Lf - Ln) : Ln = Dn : T \cdots (1)$$

From the formula (1), the parallax Dn is obtained by a formula (2).
$$Dn = T \times (Lf - Ln) / Ln \cdots (2)$$

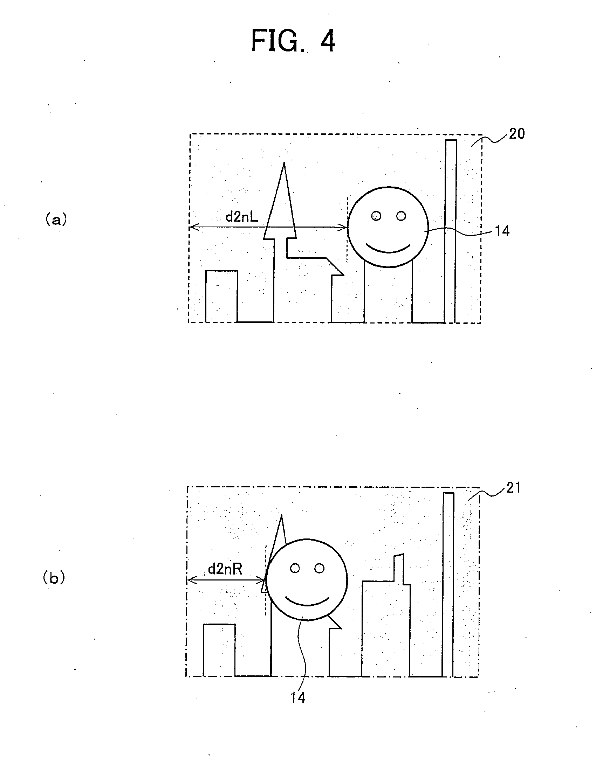

Fig. 4 is an example of a photographed image in the case of photographing with the camera 12 and the camera 13 in arrangement by the parallel viewing method of Fig. 3. Fig. 4(a) is left-eye image data 20 photographed with the camera 12, and Fig. 4(b) is right-eye image data 21 photographed with the camera 13. In the diagram, where a distance from a left end of the left-eye image data 20 to the object 14 is d2nL and a distance from a left end of the right-eye image data 21 to the object 14 is d2nR, the minimum parallax is d2nR - d2nL at the time, and an absolute value of the above d2nR - d2nL is the same value as a value of Dn in the formula (2). An increased absolute value of the parallax causes eyestrain in stereoscopic view or seeing double so that stereoscopic view is not allowed.

Further, in Fig. 3, for example, when the object 14 is moved to a position of an object 22, it comes too close to the cameras and the object 22 goes beyond the coverage 18 and the coverage 19, thereby making it impossible to display a corresponding point in an image presented in both eyes, resulting in impossible stereoscopic view. In order to avoid such a situation, an instruction manual of a camera or the like generally describes a recommended camera- specific photographing distance, and a parallax value in the case of setting an object having the recommended camera- specific photographing distance described in the instruction manual or the like is provided as minimum parallax.

Additionally, a stereoscopic viewable parallax magnitude varies between individuals, and a user may thus input a recommended individually suitable photographing distance to a camera in advance. The camera may store the value above in a storage area thereof so as to be allowed to output the value any time as individual first minimum parallax for the user.

Next, description will be given for the way of obtaining first parallax information in photographing by the cross-eyed viewing method.

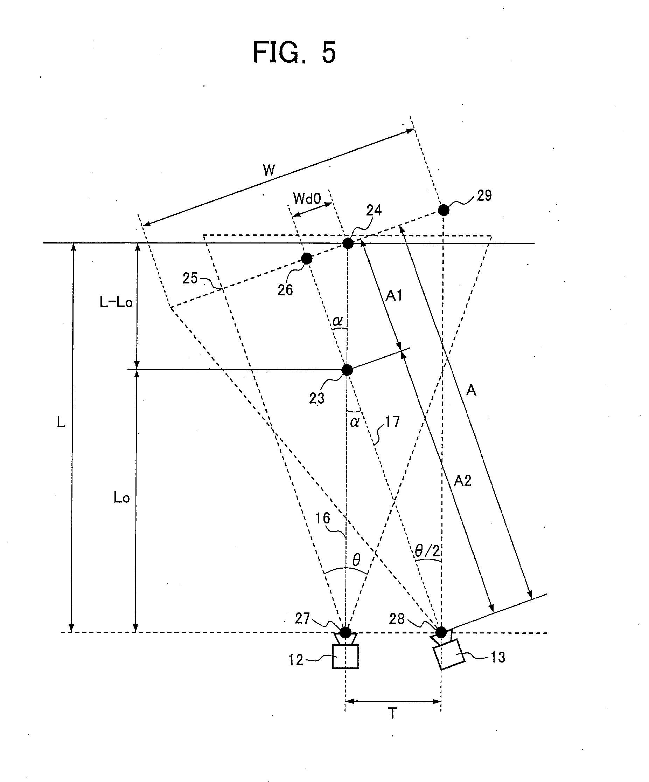

Fig. 5 is a diagram explaining stereography by the cross- eyed viewing method. The cameras in Fig. 5 are arranged having a configuration in which the camera 13 is only inclined horizontally with respect to the configuration explained in Fig. 3. The camera 12 and the camera 13 are set so as to have optical axes parallel to each other in a vertical direction as with Fig. 3, however, have the optical axis 16 intersecting with the optical axis 17 in a horizontal direction, which is different from the configuration in Fig. 3. A point where the optical axis 16 intersects with the optical axis 17 is provided as a convergence point 23. Next, description will be given for the way of obtaining parallax in a characteristic point 24. In the diagram, a line segment located on the optical axis 16 passing through the characteristic point 24 to orthogonally intersect with the optical axis 17 is a line segment 25, and length of coverage of the camera 13 is W. Furthermore, a point where the line segment 25 intersects with the optical axis 17 is a point 26. Moreover, as illustrated in Fig. 5, a position of the characteristic point 24 on the line segment 25 is a position Wd0 away from the point 26. In the embodiment, a proportional value of Wd0 to the length W of the line segment 25 is, in a right- eye image, equal to a proportional value of a distance Hd from a center point of the right- eye image to the characteristic point 24 with respect to a display size H in a horizontal direction of a display displaying the right- eye image, and represented by a formula (3).
$$Wd0/W = Hd/H \cdots (3)$$

Because the characteristic point 24 is located on the optical axis 16, a position of the characteristic point 24 in a left-eye image is a center position of the left-eye image. Therefore, parallax of the characteristic point 24 is indicated as Hd. In the diagram, a distance from the camera 12 to the characteristic point 24 is L, a distance from the camera 12 to the convergence point 23 is Lo, a distance from the camera 13 to the line segment 25 is A, a distance from the convergence point 23 to the point 26 is A1, and a distance from the convergence point 23 to the camera 13 is A2. Further, where the center of the camera 12 is a point 27, the center of the camera 13 is a point 28, and a right end point of the line segment 25 is a point 29, a relation represented by a formula (4) is obtained by focusing on a triangle formed of the point 26, the point 28 and the point 29.
$$\tan(\theta/2) = W / (2 \times A) \quad \cdots \quad (4)$$

From the formula (4), the length W of the line segment 25 is obtained by a formula (5).
$$W = 2 \times A \times \tan(\theta/2) \quad \cdots \quad (5)$$

A relation represented by a formula (6) is obtained by focusing on a triangle formed of the convergence point 23, the characteristic point 24 and the point 26, where an angle at which the optical axis 16 intersects with the optical axis 17 is $\alpha$.
$$A1 = (L - Lo) \times \cos\alpha \quad \cdots \quad (6)$$

$$Wd0 = (L - Lo) \times \sin\alpha \quad \cdots \quad (7)$$

Additionally, a relation represented by a formula (8) and a formula (9) is obtained by focusing a triangle formed of the convergence point 23, the point 27 and the point 28.
$$A2 = T/\sin\alpha \quad \cdots \quad (8)$$

$$Lo = T/\tan\alpha \quad \cdots \quad (9)$$

Where, the length W of the line segment 25 is represented as a formula (10) from A = A1 + A2, the formula (5), the formula (6), the formula (8) and the formula (9).
$$W = 2 \times ((L - T/\tan\alpha) \times \cos\alpha + T/\sin\alpha) \times \tan(\theta/2) \quad \cdots \quad (10)$$

From the formula (3) and the formula (10), parallax Hd is represented as a formula (11).
$$Hd = H \times (L - T/\tan\alpha) \times \sin\alpha / \{L \times \cos\alpha \times 2 \times \tan(\theta/2)\} \quad \cdots \quad (11)$$

Where, the farther the characteristic point 24 moves away from the convergence point, the bigger the parallax Hd becomes in the cross-eyed viewing method, and therefore, a maximum value Hdmax of the parallax Hd is obtained by making L infinite. When approximating L to be infinite in the formula (11), T/tan$\alpha$ can be neglected compared to L, and Hdmax is thus represented as a formula (12).
$$Hdmax = H \times \tan\alpha / \{2 \times \tan(\theta/2)\} \quad \cdots \quad (12)$$

As described above, a maximum parallax value by the cross-eyed viewing method is allowed to approximate as a value of the formula (12), and the value is decided according to a display size for displaying, an angle of view and an angle at which optical axes intersect, where the maximum parallax value at the time is output as maximum parallax in the first parallax information.

Further, minimum parallax that composes the first parallax information as the maximum parallax is indicated as a parallax value in a case where an object is set having a recommended camera- specific photographing distance described in a camera's instruction manual or the like similarly by either the parallel viewing method or the cross- eyed viewing method.

Additionally, as with the case by the parallel viewing method, a stereoscopic viewable parallax magnitude varies between individuals, and a user may thus input a recommended individually suitable photographing distance to a camera in advance. The camera may store the value above in a storage area thereof so as to be allowed to output the value any time as individual first minimum parallax for the user.

Next, description will be given for the second parallax information. The second parallax information is comprised of second minimum parallax as parallax at a nearest point which is a position nearest from a camera, and second maximum parallax as parallax at a farthest point which is a position farthest from a camera. These second minimum parallax and maximum parallax are obtained as parallax of an object at the nearest point in a position nearest from the camera and parallax of an object at the farthest point in a position farthest from the camera in a screen, respectively, by searching a corresponding point with use of a stereo matching method.

In the above description, the stereo matching method is a method of using a set of two images photographed with two cameras disposed right and left to compute which part of an image photographed with a right camera corresponds to an image photographed with a left camera by calculation of area correlation so as to presume a three-dimensional position of each point by triangulation using the correspondence relation. Further, as a method other than stereo matching, a user may search a corresponding point in an image to input parallax of an object viewed at the nearest point and the farthest point.

As described above, the first parallax information covering a physical parallax range obtained by geometric calculation from camera mechanism information such as information on an orientation as well as arrangement and an angle of view of a lens specific to a camera used for photographing, and the second parallax information covering an actual parallax range calculated by stereo matching, user' s manual entry and the like are calculated, output, recorded and transmitted, thereby allowing display in a comfortable and safe parallax range even in the event of errors caused by stereo matching or the like in displaying on a large screen.

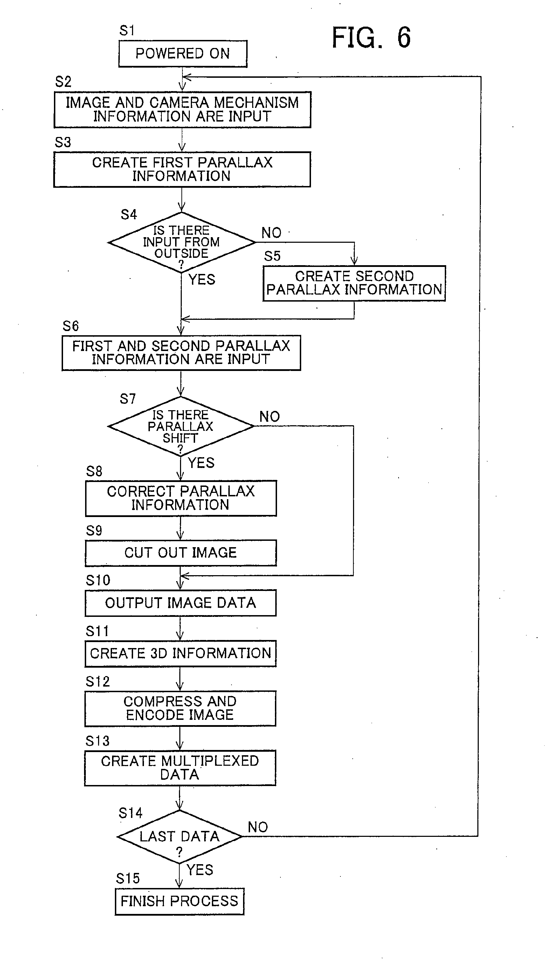

Fig. 6 is a flowchart on an operation of the stereoscopic image data creating device 1 according to the first embodiment of the present invention, and description will be given for the operation accordingly. In the embodiment, the stereoscopic image data creating device 1 of Fig. 1 is provided with imaging means (not- shown) in a previous stage. Examples of the imaging means include at least two or more cameras, one camera with a stereo adapter, a lens of large diameter or a special lens allowing photographing in all directions, a method of sliding one camera horizontally or the like.

At step S1 of Fig. 6, the stereoscopic image data creating device 1 is powered on and the process moves to step S2. At step S2, from a camera (not- shown) connected to the outside of the stereoscopic image data creating device 1, left- eye image data and right- eye image data photographed with the camera, and camera mechanism information including information of camera's base line length, angle of view and angle of convergence are input to the parallax calculating means 2. Here, the left- eye image data and the right- eye image data are input to the parallax calculating means 2 for each frame as image data composed of consecutive frames.

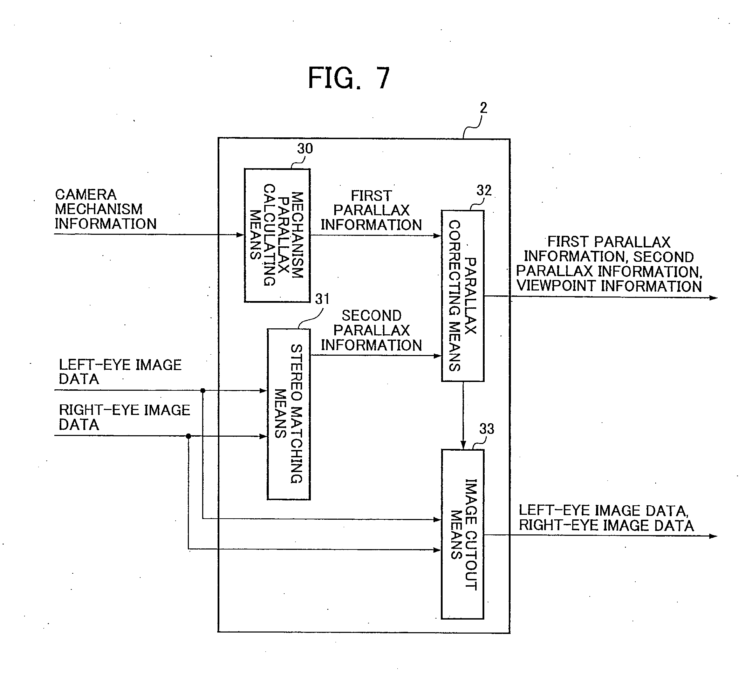

Fig. 7 is a block diagram showing a schematic configuration of parallax calculating means of the stereoscopic image data creating device according to the first embodiment of the present invention. In Fig. 7, the parallax calculating means 2 is comprised of mechanism parallax calculating means 30 for creating the first parallax information from the input camera mechanism information; stereo matching means 31 for creating the second parallax information from the input left- eye image data and right- eye image data; parallax correcting means 32 for correcting parallax of the first parallax information and the second parallax information by only a parallax- shifted amount when performing a parallax shift for an entire image; and image cutout means 33 for cutting out each of the left- eye image data and the right- eye image data at a parallax- shifted position. In the embodiment, user input means (not- shown) for accepting user input from the outside may be provided in the stereo matching means 31. For example, the user input means may allow the left- eye image data and the right- eye image data to be presented to a user and the user may thereby search a corresponding point of a nearest point and a farthest point in an image so as to input parallax at the time as second minimum parallax and second maximum parallax.

At step S3, the first parallax information is created by a method in accordance with the way of obtaining the first parallax information explained with reference to Fig. 3 to Fig. 5 by the mechanism parallax calculating means 30 inside the parallax calculating means 2 from the input camera mechanism information.

At determination step S4, the second parallax information is determined whether or not to have been manually input by a user to the stereo matching means 31 inside the parallax calculating means 2 by the user input means, and the process moves to step S6 in the case of having been input, while the process moves to step S5 otherwise.

At step S5, with use of the left-eye image data and the right-eye image data input to the stereo matching means 31, the second parallax information is created by the stereo matching method.

At step S6, the first parallax information output from the mechanism parallax calculating means 30 and the second parallax information output from the stereo matching means 31 are input to the parallax correcting means 32.

At determination step S7, determination is made on whether or not the parallax shift is performed with reference to the first parallax information and the second parallax information input to the parallax correcting means 32, and the process moves to step S8 in the case of performing the parallax shift, otherwise the process moves to step S10.

In the embodiment, description will be given for the parallax shift. In the case of generally performing stereoscopic display, the left-eye image data and the right-eye image data having the identical size are displayed at the same position in a frame sequential method, while displayed so that right and left images are vertically arranged in an alternate order by pixel unit or sub-pixel unit in a parallax barrier method. At the time, at least either of the right and left images is continuously shifted right or left uniformly on an entire screen from an original display position, thereby varying parallax of a corresponding point of the right and left images, which is referred to as the parallax shift. A user may select whether or not to perform the parallax shift. For example, an image may be stereoscopically displayed in a state of having no parallax shift to be shifted by a user so as to have preferable parallax.

Further, from among four pieces of parallax information of the first maximum parallax information and the first minimum parallax information in the first parallax information, as well as the second maximum parallax information and the second minimum parallax information in the second parallax information, at least one piece of parallax information may be selected to perform a parallax shift so that an absolute value of the selected parallax information is smaller than a predetermined value in the case of judging that the absolute value of the selected parallax information is larger than the predetermined value.

Additionally, in the four pieces of parallax information, all objects are determined whether to burst from or recede deep into a display surface, and in a case where the all objects burst from or recede deep into the surface, the parallax shift may be performed so as to have an image including both objects that burst from and recede deep into the surface. For example, in the case of photographing by the parallel viewing method, a background at infinite distance is displayed on the display surface, and all objects in front of the background are displayed so as to burst from the display surface. At the time, an entire screen may be uniformly shifted in a direction decreasing parallax of the all objects in front of the background.

At step S8, by the parallax correcting means 32 of Fig. 7, first parallax information and second parallax information created by correcting the input first parallax information and second parallax information by subtracting a parallax-shifted amount from the first parallax information and the second parallax information are corrected as new first parallax information and second parallax information to output the first parallax information, the second parallax information and viewpoint information to the 3D information creating means 3 of Fig. 1, so that the corrected parallax-shifted amount is output to the image cutout means 33.

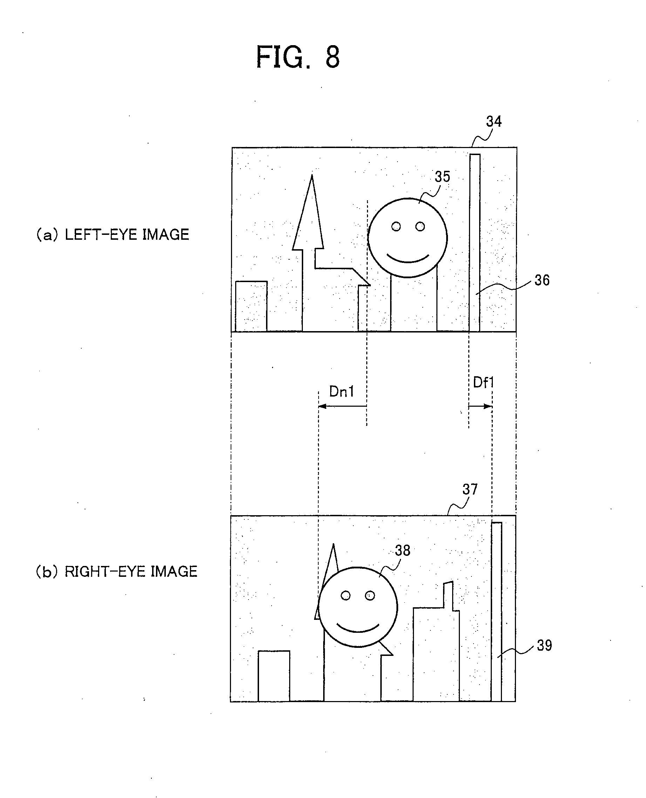

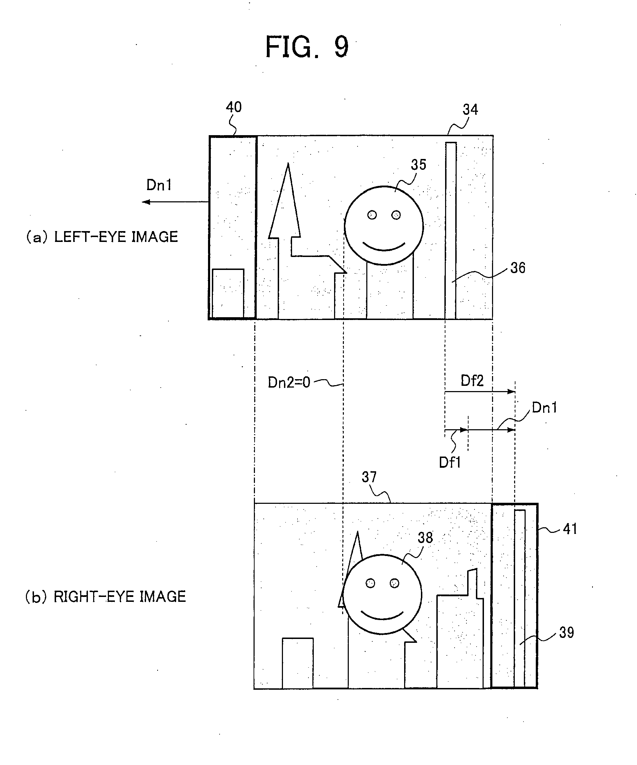

At step S9, by the image cutout means 33 of Fig. 7, the corrected parallax-shifted amount is used from the parallax correcting means 32 to shift a position of left-eye image data or right-eye image data, and an area having no respective corresponding points of right and left ends of the left-eye image data and the right-eye image data is cut out for performing cutout of an image. The parallax shift performed at the time will be described in detail with reference to Fig. 8 and Fig. 9.

Fig. 8 is an example of the left-eye image data and the right-eye image data before performing the parallax shift. Fig. 8 (a) is an example of the left-eye image data. Left-eye image data 34 shows an object 35 bursting from a display surface at the very front and an object 36 appearing to recede deepest from the display surface at the time of performing stereoscopic display. On the other hand, Fig. 8 (b) is an example of the right-eye image data. In right-eye image data 37, an object corresponding to the object 35 is an object 38, and an object corresponding to the object 36 is an object 39. In the diagram, parallax between the object 35 and the object 38 is Dn1, and parallax between the object 36 and the object 39 is Df1.

Next, description will be given for a method of changing parallax by uniformly shifting an entire screen of either the left-eye image data or the right-eye image data. Note that, generally, with respect to the right-eye image data, all objects are entirely displayed at further rear positions compared to those before performing the parallax shift in the case of stereoscopic display by shifting a display position of the left-eye image data to the left, while all objects are entirely displayed at further front positions compared to those before performing the parallax shift in the case of stereoscopic display by shifting a display position of the left-eye image data to the right.

Fig. 9 is an example of the left-eye image data and the right-eye image data after performing the parallax shift. In the diagram, for example, when the left-eye image data 34 is shifted to the left by only Dn1 in order to make parallax of the object 35 in the left-eye image data 34 null, parallax Dn2 between the object 35 and the object 38 becomes 0, parallax Df2 between the object 36 and the object 39 becomes Df1 + Dn1, and the object 35 is displayed on a display surface and the object 36 is displayed at a further rear position compared to that before performing the parallax shift.

Here, the left- eye image data is shifted to the left by only Dn1, thereby generating an area having no respective points corresponding to an area 40 of the left- eye image data 34 surrounded by a thick frame and an area 41 of the right- eye image data 37 surrounded by a thick frame. At the time, images of the area 40 and the area 41 which run off the edge are cut out because they lose corresponding point. At the time of displaying, a horizontal display area is displayed by narrowing by only a cutout part. A method of performing parallax adjustment by performing a parallax shift in this manner is generally provided, and in the case of performing parallax adjustment, values of the first parallax information and the second parallax information are corrected by only parallax- shifted amount.

Description has been given above for a case where right and left cutout images are smaller than a display size of a display for stereoscopic display, however, a CCD of a camera may be set larger than an image to be actually displayed in advance so as not to be smaller than the display size of the display for stereoscopic display, even when arranging parallax. In this case, the parallax shift may be performed by not shifting a screen but by shifting each of positions of right and left images to be cut out.

At step S10, the left-eye image data and the right-eye image data cut out by the image cutout means 33 of Fig. 7 are output to the 3D information creating means 3 of Fig. 1, and the process moves to step S11. Here, it is described that the image cutout means 33 individually outputs images for right and left eyes, but the image output means 33 may create and output one image in which images for right and left eyes are horizontally arranged, which is generally referred to as a side-by-side method, or one image in which images for right and left eyes are vertically arranged, which is referred to as a top-and-bottom method.

At step S11, by the 3D information creating means 3 of Fig. 1, the first parallax information, the second parallax information, the viewpoint information and the like output from the parallax calculating means 2 are used to create 3D information. The 3D information is output to the multiplexing means 5. Hereinafter, description will be given for the 3D information.

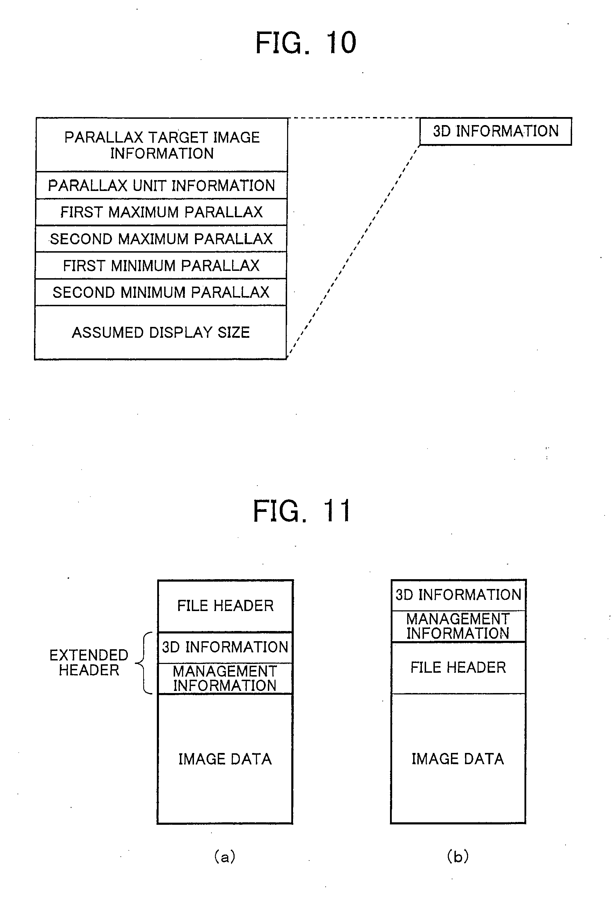

Fig. 10 is a diagram showing an example of 3D information. The 3D information includes first maximum parallax, second maximum parallax, first minimum parallax and second minimum parallax. Further, other information included in the 3D information may include parallax target image information indicating a combination of viewpoint images which are targets of the first maximum parallax, the second maximum parallax, the first minimum parallax and the second minimum parallax; parallax unit information indicating units of the first maximum parallax, the second maximum parallax, the first minimum parallax and the second minimum parallax; an assumed display size indicating in what size of a display stereoscopic display is performed at the time of stereoscopic display; and the like. At the time, separated parallax unit information may be used for each parallax of each of the first maximum parallax, the second maximum parallax, the first minimum parallax and the second minimum parallax, or 3D information may be created by entirely integrating to the same unit information.

Moreover, a user may separately input the assumed display size to the 3D information creating means 3 from the outside, or input to the 3D information creating means 3 from a camera as a part of camera mechanism information. Here, the parallax target image information is unnecessary for recording images in two right and left viewpoints, however, information required for processing images in three or more viewpoints. Since parallax is obtained from images in two viewpoints, it needs to designate parallax calculated from which two- viewpoint images among images in three or more viewpoints.

Additionally, description will be given here for the parallax unit information. The parallax unit information is information indicating a unit used for recording magnitudes of the first and second maximum parallax as well as the first and second minimum parallax. The magnitudes of the first and second maximum parallax as well as the first and second minimum parallax may be processed by pixel unit, processed by absolute unit such as "mm" or "cm", or processed by percentage relative to a horizontal width of a screen. For example, the parallax unit information may include the pixel unit in the case of indicating 0, the absolute unit such as "mm" or "cm" in the case of indicating 1, and percentage relative to a horizontal width of a screen in the case of indicating 2.

In Fig. 10, one set of the parallax unit information, the first and second maximum parallax and the first and second minimum parallax are inserted into 3D information, however, the 3D information may also include a plurality of the set.

In the case of having a configuration including a plurality of the set as described above, it is possible to use differently a set of the parallax unit information according to a usage state. For example, in the case of not recognizing a pixel pitch or the case of not performing dot-by-dot display including display by scaling and the like, parallax information represented by percentage relative to a horizontal width of a screen is used. Further, in the case of easily handling parallax using pixel unit like performing a parallax shift on a display side, parallax information represented using pixel unit is used. Moreover, parallax stereoscopically displayed in a depth direction is preferably handled using an absolute value in the case of not exceeding an interpupillary distance of both human eyes when confirmed.

As described above, a configuration including a plurality of the set of parallax unit information in 3D information is very convenient since it is possible to obtain parallax information of desired unit without converting a parallax unit on a reproducing side.

At step S12, the left-eye image data and the right-eye image data input from the parallax calculating means 2 of Fig. 1 are used to compress and encode the image by the image compression encoding means 4 for creating a compressed image data. Here, images input from the parallax calculating means 2 may be provided individually on the right and left, may be one image in which the images for right and left eyes are horizontally arranged by a so-called side-by-side method, or may be one image in which the images for right and left eyes are vertically arranged by a so-called top-and-bottom method. Further, here, as an image compression encoding method, for a still image, an international standard method such as JPEG or JPEG2000 is employed, and for a dynamic image, an international standard method such as MPEG-1, MPEG-2 or MPEG-4AVC is used. In the case of only using encoding in a frame as encoding of a dynamic image, a method of Motion JPEG or the like may be used. The image compression encoding method is not limited to the above and may be used as a non-standard method.

At step S13, multiplexed data is created by the multiplexing means 5 of Fig. 1. In the multiplexing means 5, the input 3D information created by the 3D information creating means 3 and compressed image data created by the image compression encoding means 4 are used to be converted into a predetermined format for creating multiplexed data to be output. Note that, data of voice and music in the case of being multiplexed are also multiplexed at the multiplexing means 5, which is not illustrated. Furthermore, here, a recording device such as an IC memory, a magnetic optical disk, a magnetic tape or a hard disk and a communication device such as a LAN or a modem are connected to an output device of the multiplexing means 5. Here, an IC memory is connected to the multiplexing means 5.

Hereinafter, description will be given for a recording format in the case of recording multiplexed data in an IC memory. When an IC memory is generally used as a recording medium, a file system such as FAT (File Allocation Table) is established on the IC memory, and data is recorded as a file. As a file format used in the system, an existing format may be used or a newly defined unique format may be used.

Fig. 11 is a diagram showing a file format for recording multiplexed data. In Fig. 11, data is recorded in a file in descending order of the diagram. In Fig. 11(a), an existing format is used, and in Fig. 11(b), a new format is used. In the case of using the existing format in Fig. 11(a), 3D information is recorded in an extension header area provided for extending a file header as a part of an existing file header, and in this case, a commonly-used extension is used as-is. For example, in the case of a JPEG file, an extension of .jpg is generally used. This makes it possible even for a conventional reproducing device having no display function of a three-dimensional image to recognize the file as a file in an existing format for displaying as a two-dimensional image.

On the other hand, in the case of using a new format as described in Fig. 11(b), 3D information is recorded at the head of a file. Moreover, in order to recognize a file in a new format, a unique extension is provided for allowing differentiation from a file in an existing format. Note that, management information described in Figs. 11 (a) and (b) is used for recording information not directly related to a three-dimensional image such as a creation date and a creator.

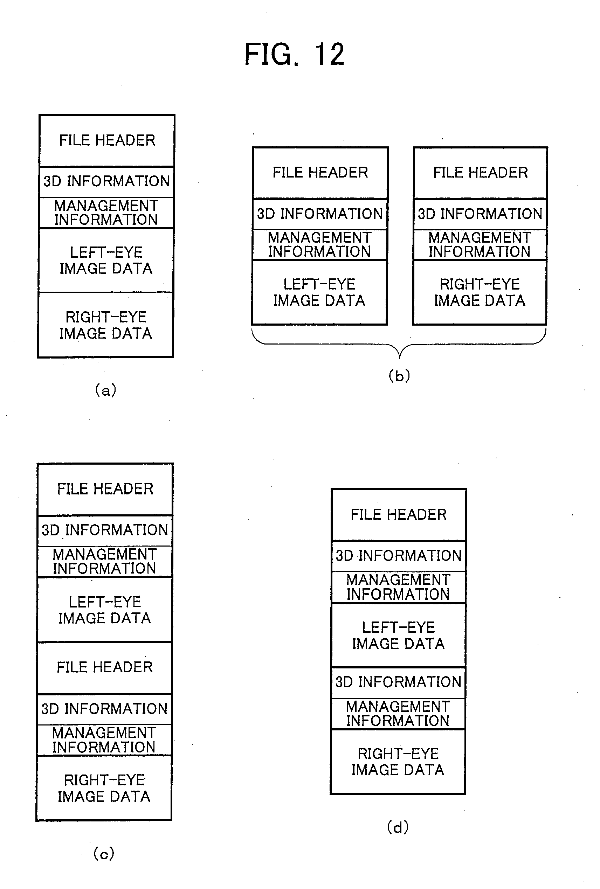

Fig. 12 is a diagram showing an example using an existing file format at the time of recording multiplexed data. Description will be given for the way to store right and left images in the case of using the existing format shown in Fig. 11(a) as an existing file format.

Fig. 12(a) shows an example where left-eye image data and right-eye image data are integrated into one piece of image data to be recorded in an image data area of Fig. 11 (a). Further, Fig. 12(b) shows an example where two right and left image data are recorded as separate files. Furthermore, Fig. 12 (c) shows an example where two files in Fig. 12(b) are recorded as one file. At the time, file headers are present on both the right and left. Note that, one file header which is deformation of an existing file format in Fig. 11 (a) may be commonalized as described in Fig. 12(d).

Note that, in the case of recording two right and left image data as separate files as shown in Fig. 12(b), in order to indicate that these two files are provided as a set of image data for right and left eyes for forming one 3D image, a folder dedicated for these files may be created for storing and managing two files in the folder. Additionally, in order to indicate that these two files are provided as a set of image data for right and left eyes for forming one 3D image, a predetermined naming rule may be used for each file name. For example, file names of image data for right and left eyes for a certain 3D image 1 may be provided as "3D image1 left.jpg" and "3D image1 right.jpg", respectively, while file names of image data for right and left eyes for a different 3D image 2 may be provided as "3D image2 left.jpg" and "3D image2 right.jpg", respectively, thereby differentiating a set of files for the 3D image 1 and the 3D image 2 by file names. Additionally, management information for indicating that these two files are provided as a set of right and left image data for forming one 3D image may be created as a different file. For example, a file describing these two file names may be created as a 3D management information file. Further, the 3D management information file may be created by describing these two file names in a metafile such as a "RAM" and an "ASX" used on a PC. Moreover, two right and left files and at least one of a common 3D information file and a 3D management information file described above may be handled in a folder created as a folder dedicated to these files.

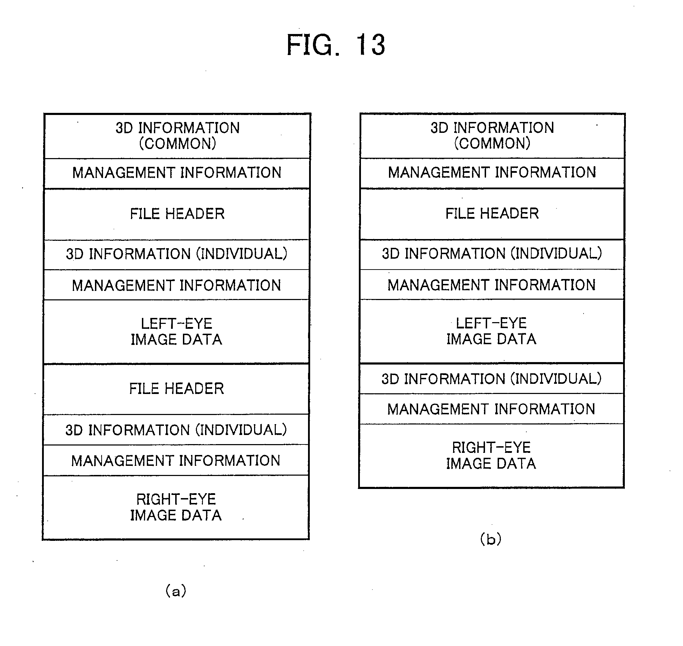

Fig. 13 is a diagram showing an example using a new file format at the time of recording multiplexed data. When a set of image data for right and left eyes for forming a 3D image is provided as one file as shown in Fig. 12(c) and Fig. 12(d), 3D information of respective image data is divided into individual information allowed to be commonalized and individual information not allowed to be commonalized, and only a part allowed to be commonalized is stored in a storage area of common 3D information, while the individual information is stored in a storage area of 3D information of image data for right and left eyes. Fig. 13 (a) shows a file format for storing common information and individual information of 3D information in Fig. 12(c) in separate areas. Moreover, Fig. 13(b) shows a file format for storing common information and individual information of 3D information of Fig. 12(d) in separate areas.

Further, as a file format for recording a still image, 3D information may be inserted into the "CIPA DC- 006, stereo still image format for digital still cameras" or the "CIPA DC- 007, multi- picture format" of CIPA standards. Note that, description has been given for a case where an arrangement order of right and left images and a storing order in a file are fixed, however, these orders may be variable. In the case of variable orders, information of orders may be recorded in 3D information.

At determination step S14 of Fig. 6, the left-eye image data and the right-eye image data input to the stereoscopic image data creating device 1 are determined whether or not to be data of a last frame, and in the case of the last frame, the process moves to step S15, while the process returns to step S2 otherwise.
At step S15, the process is finished since image data is not input to the stereoscopic image data creating device 1.

As described above, the stereoscopic image data creating device 1 creates, as stereoscopic image data, multiplexed data including compressed image data and 3D information including the first parallax information comprised of the first maximum parallax and the first minimum parallax and the second parallax information comprised of the second maximum parallax and the second minimum parallax, thereby making it possible to create multiplexed data including the first parallax information as information on maximum parallax of limit obtained from camera's mechanistic information and the second parallax information actually generated.

Further, the example has been given above for multiplexing 3D information and compressed image data created in the image compression encoding means 4, however, the 3D information and non- compressed image data may be multiplexed by omitting the image compression encoding means 4 and without compressing the input left- eye image data and right- eye image data. Moreover, description has been given above for the case of recording all of the first maximum parallax, the second maximum parallax, the first minimum parallax and the second minimum parallax, however, at least one or more of the maximum parallax or the minimum parallax among the parallax may only be recorded.

Additionally, in the above process, for each of the first maximum parallax, the second maximum parallax, the first minimum parallax and the second minimum parallax, a parallax recording feasibility flag indicating whether or not the value is recorded in 3D information may be recorded in the 3D information. At the time, among the first maximum parallax, the second maximum parallax, the first minimum parallax and the second minimum parallax, the value of parallax set to be recorded in the 3D information is only recorded in the 3D information according to the value of the parallax recording feasibility flag.

Next, description will be given for a reproducing device for stereoscopic display as a three-dimensional image of the image data created by the stereoscopic image data creating device 1.

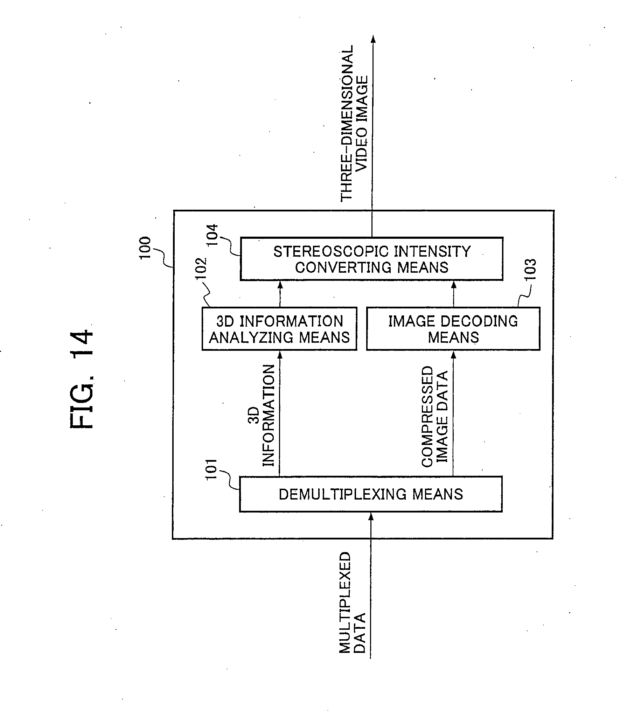

Fig. 14 is a block diagram showing a schematic configuration of the stereoscopic image data reproducing device according to the first embodiment of the present invention. In Fig. 14, a stereoscopic image data reproducing device 100 is comprised of a demultiplexing means 101 for demultiplexing multiplexed data; a 3D information analyzing means 102 for analyzing 3D information; an image decoding means 103 for decoding compressed image data that is compressed and encoded; and a stereoscopic intensity converting means 104 for generating a three-dimensional video image from the input data from the 3D information analyzing means 102 and the image decoding means 103. The operation will be described for the stereoscopic image data reproducing device 100 configured as described above.

The demultiplexing means 101 reads multiplexed data that is multiplexed in a predetermined format from a recording device or a communication device to demultiplex into compressed image data and 3D information. In a case where voice and music are multiplexed, which is not illustrated in Fig. 14, those data are also demultiplexed in the demultiplexing means 101. Here, it is assumed that an IC memory is connected to the demultiplexing means 101. As described above, an image file is recorded in the IC memory in an existing format or a new format. An existing format and a new format can be differentiated according to a file extension, thus reading 3D information from an extended partition of a file header in a case where a file to be reproduced is a file in the existing format indicated in Fig. 11(a). Further, in the case of the new format indicated in Fig. 11(b), 3D information is read from the head of the file.

The 3D information analyzing means 102 analyzes 3D information to extract parallax target image information, parallax unit information, first maximum parallax, second maximum parallax, first minimum parallax, second minimum parallax and a set value of an assumed display size for outputting to the stereoscopic intensity converting means 104.

The image decoding means 103 decodes the input compressed image data to output the decoded image data to the stereoscopic intensity converting means 104.

The stereoscopic intensity converting means 104 has the parallax target image information, the parallax unit information, the first maximum parallax, the second maximum parallax, the first minimum parallax, the second minimum parallax, the assumed display size and the decoded image data that are input to create a three-dimensional video image with parallax adjusted for the decoded image data with use of the parallax target image information, the parallax unit information, the first maximum parallax, the second maximum parallax, the first minimum parallax, the second minimum parallax and the assumed display size for outputting to an external display device.

Description will be given in detail for parallax adjustment in the stereoscopic intensity converting means 104 at the time.

First parallax information obtained from camera's mechanistic information and second parallax information actually generated by stereo matching or the like may be used for parallax adjustment.

For example, in the case of having second maximum parallax like receding from a presented position of a stereoscopic vision by first maximum parallax when comparing the first maximum parallax to the second maximum parallax, the second maximum parallax is judged as inappropriate and not used, and the first maximum parallax is used. The magnitude of the first maximum parallax is obtained from the first maximum parallax at the time, the assumed display size and the parallax unit information, which value is provided so as not to exceed a width between human eyes, to adjust parallax. The width between human eyes at the time is set to 5 cm in consideration of a width between infant's eyes as described in Non Patent Literature 1.

Moreover, in the case of having a second minimum parallax like being in front of the presented position of the stereoscopic vision by the first minimum parallax when comparing the first minimum parallax to the second minimum parallax, since it is indicated that a position of an object is in front of a recommended camera- specific photographing distance in a camera's instruction manual or the like, the stereoscopic intensity converting means 104 may determine that the image is inappropriate for a stereoscopic view to perform parallax adjustment by a parallax shift for shifting an entire screen horizontally, perform parallax adjustment by reduced display of a stereoscopic vision, stop stereoscopic display to perform 2D display, or perform stereoscopic display by performing 2D- 3D conversion with use of either one of images for right and left eyes, in order to make the second minimum parallax larger than the first minimum parallax.

Additionally, in a case where the second maximum parallax is smaller than the first maximum parallax when comparing the magnitude of the first maximum parallax to that of the second maximum parallax, parallax adjustment may be performed based on the value of the second maximum parallax.

Moreover, in a case where the second minimum parallax is larger than the first minimum parallax when comparing the magnitude of the first minimum parallax to that of the second minimum parallax, parallax adjustment may be performed based on the value of the second minimum parallax.

Further, the above parallax adjustment is performed by calculating with the assumed display size, however, when the display size to be displayed is different from the assumed display size, the display size to be displayed may be input to the stereoscopic image data reproducing device 100 from the outside by user's manual input, communication among devices or the like to obtain parallax with use of the input display size to be displayed. Note that, a visual distance at the time is assumed to be viewed in the assumed display size or height three times higher than a display size to be actually displayed.

Furthermore, description has been given above for the case of performing parallax adjustment with use of all of the first maximum parallax, the second maximum parallax, the first minimum parallax and the second minimum parallax, however, at least one or more of maximum parallax or minimum parallax among these parallax may be used to perform parallax adjustment. Further, in a case where all of the first maximum parallax, the second maximum parallax, the first minimum parallax and the second minimum parallax are not recorded in 3D information, at least one or more of maximum parallax or minimum parallax among the recorded parallax may be used to perform parallax adjustment.

Note that, in the above process, when multiplexed data input to the demultiplexing means 101 is comprised of 3D information and non-compressed image data, the image decoding means 103 may output the input non-compressed image data as-is without especially performing decoding processing in place of the decoded image data. As described above, the first parallax information and the second parallax information are used to perform appropriate parallax adjustment in a system comprised of the stereoscopic image data creating device 1 and the stereoscopic image data reproducing device 100 according to the first embodiment of the present invention, thereby allowing realization of safer and more comfortable stereoscopic display. Further, description has been given for the case of having two viewpoints in the above embodiment, however, the present invention may also be applied to the case of so-called multi viewpoints having three or more viewpoints.

[EXAMPLE 2]

Next, description will be given for the case of images in n or more viewpoints (n is an integer greater than or equal to 3) to be input to the stereoscopic image data creating device, as a second embodiment of the present invention.

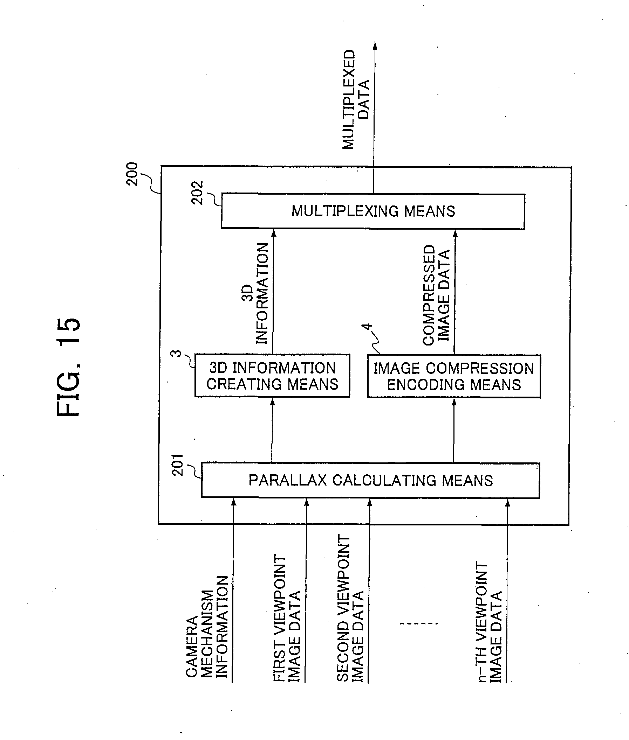

Fig. 15 is a block diagram showing a schematic configuration of a stereoscopic image data creating device according to the second embodiment of the present invention. In Fig. 15, a stereoscopic image data creating device 200 is comprised of a parallax calculating means 201, the 3D information creating means 3, the image compression encoding means 4 and multiplexing means 202. The parallax calculating means 201 has camera mechanism information and image data in n viewpoints that are input, and outputs first parallax information obtained by geometric calculation from the camera mechanism information, second parallax information calculated by selecting image data in two viewpoints from the image data in n viewpoints to search a corresponding point with use of the selected image data in two viewpoints, parallax calculation viewpoint information indicating that parallax is calculated from which viewpoint image, and the image data in n viewpoints. The 3D information creating means 3 has the parallax calculation viewpoint information, the first parallax information and the second parallax information that are input to create and output 3D information from the input parallax calculation viewpoint information, first parallax information and second parallax information. The image compression encoding means 4 has the image data in n viewpoints that is input, and performs compression encoding for the input image data in n viewpoints to create and output compressed image data. The multiplexing means 202 has the 3D information created in the 3D information creating means 3 and the compressed image data created in the image compression encoding means 4 that are input, and multiplexes the input 3D information and compressed image data to create and output multiplexed data.

Among respective means constituting the stereoscopic image data creating device 200, the 3D information creating means 3 and the image compression encoding means 4 are the same as those in the first embodiment, which explanation is thus omitted in this embodiment, and description will be given for each operation of the parallax calculating means 201 and the multiplexing means 202.

First, description will be given for the parallax calculating means 201.

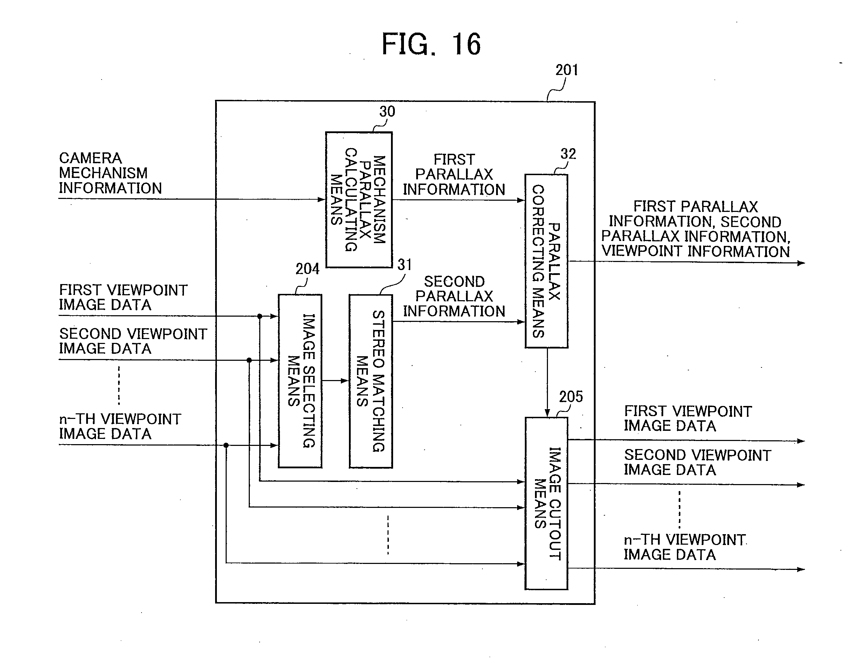

Fig. 16 is a block diagram showing a schematic configuration of parallax calculating means of the stereoscopic image data creating device according to the second embodiment of the present invention. In Fig. 16, the parallax calculating means 201 is comprised of the mechanism parallax calculating means 30, image selecting means 204, the stereo matching means 31, the parallax correcting means 32 and image cutout means 205. The parallax calculating means 201 in Fig. 16 is a means for extending the parallax calculating means 2 of Fig. 7 for input of an image in n viewpoints. Among respective means constituting the parallax calculating means 201, the mechanism parallax calculating means 30, the stereo matching means 31 and the parallax correcting means 32 are the same as those in the first embodiment, which explanation is thus omitted in this embodiment.

First, image data in n viewpoints is input to the image selecting means 204, and the image selecting means 204 selects and outputs image data in two viewpoints from the input image data in n viewpoints. At the time, the image data in two viewpoints to be selected is selected as an image having a combination of viewpoints allowing consistency with camera mechanism information. For example, when the camera mechanism information is information from a camera having viewpoints next to each other, the data may be selected from any of a combination of cameras having viewpoints corresponding to the information. At the time, the parallax calculating means 201 outputs information on the selected viewpoint image data to the 3D information creating means 3 as parallax calculation viewpoint information. Further, in the embodiment, the image selecting means 204 may select a plurality of viewpoints in combination allowing consistency with the camera mechanism information. In this case, the stereo matching means 31 may obtain parallax for each of the plurality of the combination to output the largest parallax thereamong.

Next, description will be given for the image cutout means 205. Image data in n viewpoints is input to the image cutout means 205, and the image cutout means 205 performs a parallax shift by a parallax- shifted amount designated by the parallax correcting means 32 for the input image data in n viewpoints, thereafter outputting each cutout image as the image data in n viewpoints. At the time, in the parallax shift, so as to have the same shifted amount in each of the combination of viewpoint image data in n viewpoints next to each other, an image may be cut out so that all of the viewpoint image data in n viewpoints have parallax varying by the same amount, or the parallax shift may be performed with only a combination of two viewpoint image data indicated by parallax calculation viewpoint information.

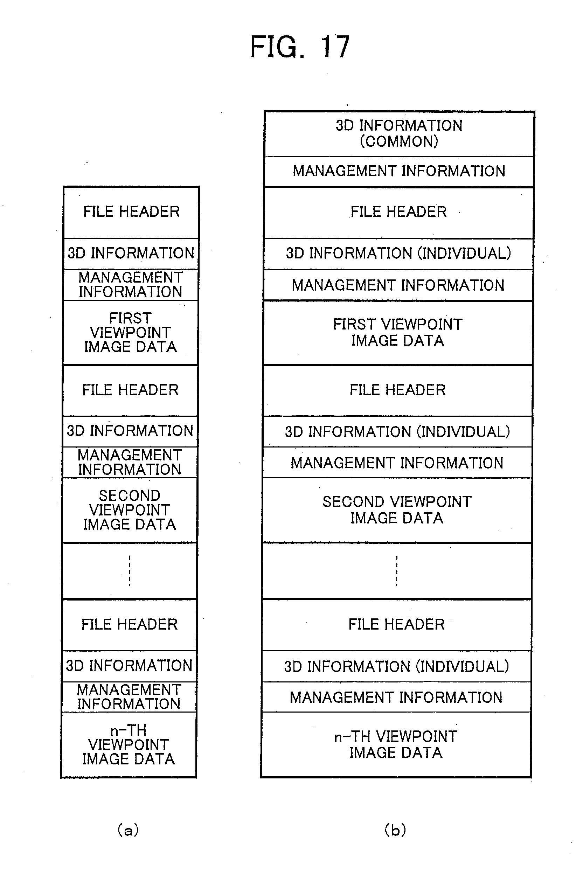

Fig. 17 is a diagram showing an example of a file format for recording multiplexed data that is created from the viewpoint image data in n viewpoints created by the stereoscopic image data creating device 200. In the diagram, viewpoint image information is information on one piece of viewpoint image data, and comprised of a file header, 3D information extracted from each viewpoint image data, management information on each viewpoint image data and the viewpoint image data. Fig. 17(a) shows an example for storing n pieces of viewpoint image information as one file in which the heads of files are connected to each other. Fig. 17 (b) shows an example for separately integrating common information into one piece of common 3D information from 3D information belonging to each of n pieces of viewpoint image information to be stored at the head of a file, then storing management information of the entire file and the connected n pieces of the viewpoint image information.

As described above, the stereoscopic image data creating device 200 creates, as stereoscopic image data, multiplexed data including 3D information including the first parallax information comprised of the first maximum parallax and the first minimum parallax, the second parallax information comprised of the second maximum parallax and the second minimum parallax, and parallax calculation viewpoint information; and compressed image data in which viewpoint image data in n viewpoints is compressed, thereby making it possible to create multiplexed data corresponding to viewpoint image data in n viewpoints including the first parallax information as information on maximum parallax of limit obtained from camera's mechanistic information and the second parallax information actually generated.

Next, description will be given for a stereoscopic image data reproducing device 300 for performing stereoscopic display as a three-dimensional image the image data created in the stereoscopic image data creating device 200.

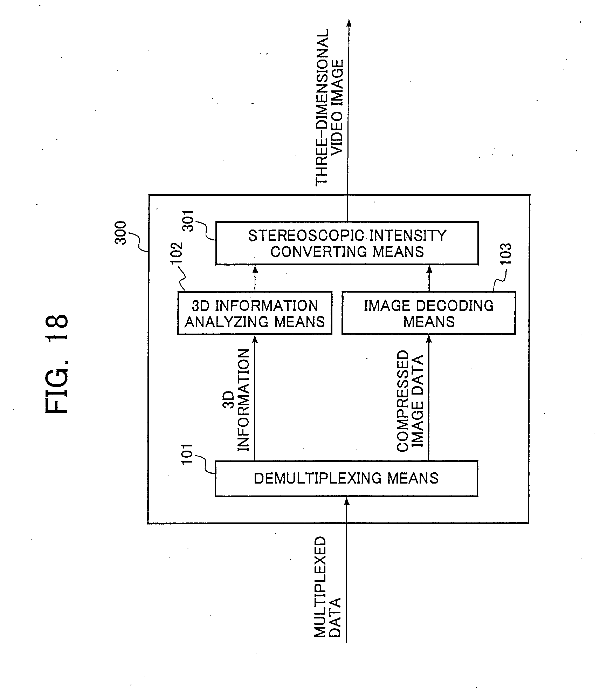

Fig. 18 is a block diagram showing a schematic configuration of the stereoscopic image data reproducing device according to the second embodiment of the present invention. In Fig. 18, the stereoscopic image data reproducing device 300 is comprised of the demultiplexing means 101 for demultiplexing multiplexed data; the 3D information analyzing means 102 for analyzing 3D information; the image decoding means 103 for decoding compressed image data that is compressed and encoded; and a stereoscopic intensity converting means 301 for generating a three-dimensional video image from the input data from the 3D information analyzing means 102 and the image decoding means 103. Among respective means constituting the stereoscopic image data reproducing device 300 of Fig. 18, the demultiplexing means 101, the 3D information analyzing means 102 and the image decoding means 103 are the same as those in the first embodiment, which explanation is thus omitted in this embodiment, and description will be hereinafter given for the operation of the stereoscopic intensity converting means 301.

To the stereoscopic intensity converting means 301, as the 3D information analyzed and extracted in the 3D information analyzing means 102, parallax target image information, parallax unit information, first maximum parallax, second maximum parallax, first minimum parallax, second minimum parallax, an assumed display size and viewpoint image data in n viewpoints decoded in the image decoding means 103 are input. In the stereoscopic intensity converting means 301, image data in two viewpoints indicated by the parallax target image information is selected from the input viewpoint image in n viewpoints, and for the selected image data, as with the stereoscopic intensity converting means 104, the parallax unit information, the first maximum parallax, the second maximum parallax, the first minimum parallax, the second minimum parallax and the assumed display size are used to create and output a three-dimensional video image with parallax adjusted for the selected image data. At the time, the stereoscopic intensity converting means 301 may perform a parallax shift by the same amount for other viewpoint images next to each other which are not selected above.

As described above, the first parallax information and the second parallax information are used to perform appropriate parallax adjustment in a system comprised of the stereoscopic image data creating device 200 and the stereoscopic image data reproducing device 300 according to the second embodiment of the present invention, thereby allowing realization of safer stereoscopic display as with the case of two viewpoints even when image data in n viewpoints are processed.

Further, description has been given for a case where a plurality of images are input in the above embodiment, however, the present invention is also applicable for the case of mounting an adapter for stereography on a monocular imaging device. Adapters for stereography include a stereo adapter for photographing images for right and left eyes on one screen and an adapter for photographing a plurality of viewpoint images on one screen. In using these adapters, in the above-described parallax calculating means 2 and parallax calculating means 201, two images required for calculation of parallax are separated for calculating parallax, and selected whether to be output as one image as-is or to be output by individually separating viewpoints, to be output to the image compression encoding means 4 so as to be suited to a desired format of compressed image data. In the embodiment, others except the parallax calculating means 2 and the parallax calculating means 201 described above are operated the same, which description is thus omitted.

As described above, according to the stereoscopic image data creating device, the stereoscopic image data reproducing device and the file management method of the present invention, the stereoscopic image data creating device uses first maximum parallax as a maximum value of parallax geometrically obtained from a mechanism of imaging means, first minimum parallax as parallax that falls within a predetermined parallax range and is at a position nearest from the imaging means, second maximum parallax as a maximum value of parallax of a stereoscopic image and second minimum parallax as a minimum value of parallax of a stereoscopic image to be created as 3D information to create and transmit multiplexed data with a plurality of image data multiplexed constituting the created 3D information and stereoscopic image data, while the stereoscopic image data reproducing device receives and demultiplexes the multiplexed data to use the first maximum parallax, the first minimum parallax, the second maximum parallax and the second minimum parallax decoded from the 3D information, thereby allowing parallax adjustment suited to a display size to be displayed to be performed safe and appropriately with higher flexibility.

Further, according to the present invention, first parallax information and second parallax information are recorded and reproduced as 3D information, thereby allowing parallax adjustment with use of a limit value of parallax by a camera mechanism and an actual parallax value, while the magnitude of first maximum parallax is compared to that of second maximum parallax and the magnitude of first minimum parallax is compared to that of second minimum parallax so that it is possible to obtain an advantageous effect so as to allow to determine whether or not values of the second maximum parallax and minimum parallax are appropriate.

Additionally, according to the present invention, stereoscopic image data is displayed on a large screen by adjusting intensity of a stereoscopic effect by a parallax shift and the like with use of a limit value of parallax by a camera mechanism, thereby making it possible to obtain an advantageous effect so as to allow safer adjustment of a stereoscopic effect.

Furthermore, according to the present invention, first maximum parallax, second maximum parallax, first minimum parallax and second minimum parallax are formed into metadata so that it is possible to obtain an advantageous effect so as to allow image data for three- dimensional display to have versatility.

The above embodiments should be considered to be illustrated in all respects and not restrictive. For example, in the present embodiments, the stereoscopic image data creating device, the stereoscopic image data reproducing device and the file management method have been illustrated, however, the present invention is not limited to the stereoscopic image data creating device and the stereoscopic image data reproducing device, and just needed to create or reproduce a 3D video signal. The present invention may also be widely applied to equipment capable of outputting or displaying a 3D video signal of a 3D digital camera, a 3D digital movie, a 3D television, a digital video recorder, a portable movie player, a cellular phone, a car navigation system, a portable DVD player, a PC or the like, also for others except the stereoscopic image data creating device, the stereoscopic image data reproducing device and the file management method.

INDUSTRIAL APPLICABILITY

The stereoscopic image data creating device, the stereoscopic image data reproducing device and the file management method according to the present invention relate to a stereoscopic image data creating device, a stereoscopic image data reproducing device and a file management method capable of performing, in displaying a stereoscopic image, safer parallax adjustment with higher reliability and higher flexibility which is suited to a display size from a limit value of parallax by a camera mechanism and a limit value of parallax of a stereoscopic image.

EXPLANATIONS OF LETTERS OR NUMERALS

1, 200...stereoscopic image data creating device; 2, 201...parallax calculating means; 3... 3D information creating means; 4...image compression encoding means; 5, 202...multiplexing means; 6, 34...left- eye image data; 7, 10...farthest point; 8, 11...nearest point; 9, 37...right- eye image data; 12, 13...camera; 14, 22, 35, 36, 38, 39...object; 15...background; 16, 17...optical axis; 18, 19...coverage; 20, 21...photographed image; 23...convergence point; 24...characteristic point; 25...line segment; 26, 27, 28, 29...point; 30...mechanism parallax calculating means; 31...stereo matching means; 32...parallax correcting means; 33, 205...image cutout means; 40, 41...area; 100, 300...stereoscopic image data reproducing device; 101...demultiplexing means; 102... 3D information analyzing means; 103...image decoding means; 104, 301...stereoscopic intensity converting means; 204...image selecting means; 400...left- eye image; 401...right- eye image; 402...active shutter glasses; 403...left- eye lens shutter; 404...right- eye lens shutter; 410...image display panel; 411...parallax barrier; 412...left eye; 413...right eye; S1, S2, S3, S5, S6, S8, S9, S10, S11, S12, S13, 515...step; and S4, S7, S14...determination step.

**Claims**

1. A stereoscopic image data creating device for creating image data in a predetermined file format from a plurality of image data corresponding to each of a plurality of viewpoints, comprising:

   a 3D information creating means for creating and outputting 3D information by using at least one or more maximum parallax or minimum parallax among a first maximum parallax, a second maximum parallax, a first minimum parallax, and a second minimum parallax which are input, wherein the first maximum parallax is a maximum value of parallax geometrically obtained from a mechanism of the imaging means, the first minimum parallax is a parallax which falls within a predetermined parallax range from the mechanism of the imaging means and is at a position nearest from the imaging means, the second maximum parallax is a maximum value of parallax between a left-eye image and a right-eye image of a stereoscopic image, and the second minimum parallax is a minimum value of parallax between the left-eye image and the right-eye image of the stereoscopic image; and
   a multiplexing means for multiplexing the 3D information and the image data to create stereoscopic image data in a predetermined file format.

2. A stereoscopic image data creating device for creating image data in a predetermined file format from a plurality of image data corresponding to each of a plurality of viewpoints, comprising:

   a 3D information creating means for creating and outputting 3D information by using at least one or more maximum parallax or minimum parallax among a first maximum parallax, a second maximum parallax, a first minimum parallax, and a second minimum parallax which are input, wherein the first maximum parallax is a maximum value of parallax geometrically obtained from a mechanism of imaging means, the first minimum parallax is a parallax which falls within a predetermined parallax range from the mechanism of the imaging means and is at a position nearest from the imaging means, the second maximum parallax is a maximum value of parallax between a left-eye image and a right-eye image of a stereoscopic image, and the second minimum parallax is a minimum value of parallax between the left-eye image and the right-eye image of the stereoscopic image;

an image compression encoding means for performing compression encoding on the input plurality of image data to output compressed image data; and

a multiplexing means for multiplexing the 3D information and the compressed image data to create stereoscopic image data in a predetermined file format.

3. The stereoscopic image data creating device as defined in claim 1 or claim 2, wherein
the stereoscopic image data in the predetermined file format includes the image data in n viewpoints as the plurality of viewpoints where n is three or more.

4. The stereoscopic image data creating device as defined in claim 1 to claim 3, wherein
when 3D information is created from the first maximum parallax, the second maximum parallax, the first minimum parallax, and the second minimum parallax, the 3D information creating means generates parallax unit information that indicates units of the first maximum parallax, the second maximum parallax, the first minimum parallax, and the second minimum parallax, while the stereoscopic image data in the predetermined file format includes the parallax unit information.

5. A stereoscopic image data creating device including the parallax unit information as defined in claim 4, wherein
a unit of the first maximum parallax, the second maximum parallax, the first minimum parallax, and the second minimum parallax is any of a pixel unit, a sub-pixel unit, a unit of length, a unit of distance, or percentage to a width of an entire image.

6. The stereoscopic image data creating device as defined in claim 1 to claim 3, wherein
when 3D information is created from the first maximum parallax, the second maximum parallax, the first minimum parallax, and the second minimum parallax, the 3D information creating means generates parallax target image information indicating, from which two viewpoint image data in combination among the plurality of image data, the first maximum parallax, the second maximum parallax, the first minimum parallax, and the second minimum parallax are obtained, and the stereoscopic image data in the predetermined file format includes the parallax target image information.

7. A stereoscopic image data reproducing device for reproducing a plurality of image data corresponding to each of a plurality of viewpoints from image data in a predetermined file format, comprising:

a demultiplexing means for demultiplexing, from the file format, image data and 3D information indicating at least one or more maximum parallax or minimum parallax among first maximum parallax as a maximum value of parallax geometrically obtained from a mechanism of imaging means, second maximum parallax as a maximum value of parallax between a left-eye image and a right-eye image of a stereoscopic image, first minimum parallax which falls within a predetermined parallax range from the mechanism of the imaging means and is parallax at a position nearest from the imaging means, and second minimum parallax as a minimum value of parallax between the left-eye image and the right-eye image of the stereoscopic image;
a 3D information analyzing means for analyzing the 3D information; and
a stereoscopic intensity converting means for adjusting parallax for the image data, wherein
the 3D information analyzing means analyzes the 3D information, and
the stereoscopic intensity converting means uses at least one or more maximum parallax or minimum parallax among the first maximum parallax, the second maximum parallax, the first minimum parallax, and the second minimum parallax to adjust parallax of the image data for reproduction.

8. A stereoscopic image data reproducing device for reproducing a plurality of image data corresponding to each of a plurality of viewpoints from image data in a predetermined file format, comprising:

a demultiplexing means for demultiplexing, from the file format, compressed image data and 3D information indicating at least one or more maximum parallax or minimum parallax among first maximum parallax as a maximum value of parallax geometrically obtained from a mechanism of imaging means, second maximum parallax as a maximum value of parallax between a left-eye image and a right-eye image of a stereoscopic image, first minimum parallax which falls within a predetermined parallax range from the mechanism of the imaging means and is parallax at a position nearest from the imaging means, and second minimum parallax as a minimum value of parallax between the left-eye image and the right-eye image of the stereoscopic image;

a 3D information analyzing means for analyzing the 3D information;

an image decoding means for decoding the compressed image data; and

a stereoscopic intensity converting means for adjusting parallax for image data in which the compressed image data is decoded, wherein

the 3D information analyzing means analyzes the 3D information, and

the stereoscopic intensity converting mean uses at least one or more maximum parallax or minimum parallax among the first maximum parallax, the second maximum parallax, the first minimum parallax, and the second minimum parallax to adjust parallax of the image data for reproduction.

9. The stereoscopic image data reproducing device as defined in claim 7 or claim 8, wherein
in the case of analyzing information indicating the first maximum parallax, the second maximum parallax, the first minimum parallax, and the second minimum parallax, the 3D information analyzing means analyzes parallax unit information indicating units of the first maximum parallax, the second maximum parallax, the first minimum parallax, and the second minimum parallax, and uses the analyzed parallax unit information to analyze information indicating the first maximum parallax, the second maximum parallax, the first minimum parallax, and the second minimum parallax.

10. The stereoscopic image data reproducing device as defined in claim 7 or claim 8, wherein
the 3D information includes parallax target image information indicating, from which two viewpoint image data in combination among the plurality of image data, the first maximum parallax, the second maximum parallax, the first minimum parallax, and the second minimum parallax are obtained, and
the 3D information analyzing means analyzes the parallax target image information, while the stereoscopic intensity converting means adjusts parallax for the image data indicated by the parallax target image information.

11. The stereoscopic image data reproducing device as defined in claim 7 or claim 8, wherein
in the case of adjusting parallax for the image data, the stereoscopic intensity converting means compares the magnitude of the first maximum parallax to that of the second maximum parallax, and when the second maximum parallax is larger than the first maximum parallax, judges that a value of the second maximum parallax is inappropriate, and adjusts parallax based on the first maximum parallax.

12. A file management method of managing 3D information as attribute information for stereoscopic display with image data, wherein
the 3D information is comprised of parallax target image information indicating a combination of viewpoint images, parallax unit information indicating units of first and second maximum parallax and first and second minimum parallax, first maximum parallax, second maximum parallax, first minimum parallax, second minimum parallax, and an assumed display size indicating a size of a display for stereoscopic display of the image data.

13. The file management method as defined in claim 12, wherein
the 3D information includes a parallax recording feasibility flag indicating whether parallax information of each of the first and second maximum parallax and the first and second minimum parallax is recorded in the 3D information.

14. The file management method as defined in claim 12 or claim 13, wherein
a file to be managed is comprised of a file header, the 3D information, management information to be used for recording information which is not directly related to a three-dimensional image, and the image data, and
the file header, the 3D information, the management information, and the image data are arranged from the head of the file in an order of the file header, the 3D information, the management information, and the image data.

15. The file management method as defined in claim 12 or claim 13, wherein
a file to be managed is comprised of the 3D information, management information to be used for recording information which is not directly related to a three-dimensional image, a file header, and the image data, and
the 3D information, the management information, the file header, and the image data are arranged from the head of the file in an order of the 3D information, the management information, the file header, and the image data.

16. The file management method as defined in claim 12 to claim 15, wherein the image data is comprised of both of left-eye image data and right-eye image data.

FIG. 1

MULTIPLEXED DATA

1

5 MULTIPLEXING MEANS

3D INFORMATION

COMPRESSED IMAGE DATA

3 3D INFORMATION CREATING MEANS

4 IMAGE COMPRESSION ENCODING MEANS

2 PARALLAX CALCULATING MEANS

CAMERA MECHANISM INFORMATION

LEFT-EYE IMAGE DATA

RIGHT-EYE IMAGE DATA

# FIG. 2

(a)

LEFT-EYE
IMAGE DATA

W · 6

dnL

POINT VIEWED
NEAREST

8

dfL

POINT VIEWED
FARTHEST

7

(b)

RIGHT-EYE
IMAGE DATA

W · 9

dnR

POINT VIEWED
NEAREST

11

dfR

10

POINT VIEWED
FARTHEST

# FIG. 3

# FIG. 4

(a)

d2nL

20

14

(b)

d2nR

21

14

# FIG. 5

# FIG. 6

S1
POWERED ON

S2
IMAGE AND CAMERA MECHANISM
INFORMATION ARE INPUT

S3
CREATE FIRST PARALLAX
INFORMATION

S4
IS THERE
INPUT FROM
OUTSIDE
?  → NO

YES

S5
CREATE SECOND
PARALLAX INFORMATION

S6
FIRST AND SECOND PARALLAX
INFORMATION ARE INPUT

S7
IS THERE
PARALLAX
SHIFT
?  → NO

YES

S8
CORRECT PARALLAX
INFORMATION

S9
CUT OUT IMAGE

S10
OUTPUT IMAGE DATA

S11
CREATE 3D INFORMATION

S12
COMPRESS AND
ENCODE IMAGE

S13
CREATE MULTIPLEXED
DATA

S14
LAST DATA
?  → NO

YES

S15
FINISH PROCESS

# FIG. 7

CAMERA MECHANISM INFORMATION → MECHANISM PARALLAX CALCULATING MEANS (30) → FIRST PARALLAX INFORMATION → PARALLAX CORRECTING MEANS (32) → FIRST PARALLAX INFORMATION, SECOND PARALLAX INFORMATION, VIEWPOINT INFORMATION

LEFT-EYE IMAGE DATA
RIGHT-EYE IMAGE DATA → STEREO MATCHING MEANS (31) → SECOND PARALLAX INFORMATION

IMAGE CUTOUT MEANS (33) → LEFT-EYE IMAGE DATA, RIGHT-EYE IMAGE DATA

2

EP 2 637 413 A1

# FIG. 8

(a) LEFT-EYE IMAGE

34

35

36

Dn1

Df1

(b) RIGHT-EYE IMAGE

37

38

39

# FIG. 9

(a) LEFT-EYE IMAGE

(b) RIGHT-EYE IMAGE

# FIG. 10

| PARALLAX TARGET IMAGE INFORMATION |
| --- |
| PARALLAX UNIT INFORMATION |
| FIRST MAXIMUM PARALLAX |
| SECOND MAXIMUM PARALLAX |
| FIRST MINIMUM PARALLAX |
| SECOND MINIMUM PARALLAX |
| ASSUMED DISPLAY SIZE |

3D INFORMATION

# FIG. 11

EXTENDED
HEADER

| FILE HEADER |
| --- |
| 3D INFORMATION |
| MANAGEMENT INFORMATION |
| IMAGE DATA |

(a)

| 3D INFORMATION |
| --- |
| MANAGEMENT INFORMATION |
| FILE HEADER |
| IMAGE DATA |

(b)

# FIG. 12

| FILE HEADER |
|---|
| 3D INFORMATION |
| MANAGEMENT INFORMATION |
| LEFT-EYE IMAGE DATA |
| RIGHT-EYE IMAGE DATA |

(a)

| FILE HEADER |
|---|
| 3D INFORMATION |
| MANAGEMENT INFORMATION |
| LEFT-EYE IMAGE DATA |

| FILE HEADER |
|---|
| 3D INFORMATION |
| MANAGEMENT INFORMATION |
| RIGHT-EYE IMAGE DATA |

(b)

| FILE HEADER |
|---|
| 3D INFORMATION |
| MANAGEMENT INFORMATION |
| LEFT-EYE IMAGE DATA |
| FILE HEADER |
| 3D INFORMATION |
| MANAGEMENT INFORMATION |
| RIGHT-EYE IMAGE DATA |

(c)

| FILE HEADER |
|---|
| 3D INFORMATION |
| MANAGEMENT INFORMATION |
| LEFT-EYE IMAGE DATA |
| 3D INFORMATION |
| MANAGEMENT INFORMATION |
| RIGHT-EYE IMAGE DATA |

(d)

# FIG. 13

| 3D INFORMATION (COMMON) |
| :---: |
| MANAGEMENT INFORMATION |
| FILE HEADER |
| 3D INFORMATION (INDIVIDUAL) |
| MANAGEMENT INFORMATION |
| LEFT-EYE IMAGE DATA |
| FILE HEADER |
| 3D INFORMATION (INDIVIDUAL) |
| MANAGEMENT INFORMATION |
| RIGHT-EYE IMAGE DATA |

(a)

| 3D INFORMATION (COMMON) |
| :---: |
| MANAGEMENT INFORMATION |
| FILE HEADER |
| 3D INFORMATION (INDIVIDUAL) |
| MANAGEMENT INFORMATION |
| LEFT-EYE IMAGE DATA |
| 3D INFORMATION (INDIVIDUAL) |
| MANAGEMENT INFORMATION |
| RIGHT-EYE IMAGE DATA |

(b)

# FIG. 14

# FIG. 15

EP 2 637 413 A1

# FIG. 16

201

CAMERA MECHANISM INFORMATION → MECHANISM PARALLAX CALCULATING MEANS (30) → FIRST PARALLAX INFORMATION → PARALLAX CORRECTING MEANS (32) → FIRST PARALLAX INFORMATION, SECOND PARALLAX INFORMATION, VIEWPOINT INFORMATION

FIRST VIEWPOINT IMAGE DATA
SECOND VIEWPOINT IMAGE DATA
n-TH VIEWPOINT IMAGE DATA

IMAGE SELECTING MEANS (204) → STEREO MATCHING MEANS (31) → SECOND PARALLAX INFORMATION → PARALLAX CORRECTING MEANS

IMAGE CUTOUT MEANS (205) → FIRST VIEWPOINT IMAGE DATA
SECOND VIEWPOINT IMAGE DATA
n-TH VIEWPOINT IMAGE DATA

EP 2 637 413 A1

# FIG. 17

| 3D INFORMATION (COMMON) |
|---|
| MANAGEMENT INFORMATION |
| FILE HEADER |
| 3D INFORMATION (INDIVIDUAL) |
| MANAGEMENT INFORMATION |
| FIRST VIEWPOINT IMAGE DATA |
| FILE HEADER |
| 3D INFORMATION (INDIVIDUAL) |
| MANAGEMENT INFORMATION |
| SECOND VIEWPOINT IMAGE DATA |
| ⋮ |
| FILE HEADER |
| 3D INFORMATION (INDIVIDUAL) |
| MANAGEMENT INFORMATION |
| n-TH VIEWPOINT IMAGE DATA |

| |
|---|
| FILE HEADER |
| 3D INFORMATION |
| MANAGEMENT INFORMATION |
| FIRST VIEWPOINT IMAGE DATA |
| FILE HEADER |
| 3D INFORMATION |
| MANAGEMENT INFORMATION |
| SECOND VIEWPOINT IMAGE DATA |
| ⋮ |
| FILE HEADER |
| 3D INFORMATION |
| MANAGEMENT INFORMATION |
| n-TH VIEWPOINT IMAGE DATA |

(a)                              (b)

# FIG. 18

EP 2 637 413 A1

MULTIPLEXED DATA →

**300**

**101** DEMULTIPLEXING MEANS

3D INFORMATION →

**102** 3D INFORMATION ANALYZING MEANS

COMPRESSED IMAGE DATA →

**103** IMAGE DECODING MEANS

**301** STEREOSCOPIC INTENSITY CONVERTING MEANS

→ THREE-DIMENSIONAL VIDEO IMAGE

# FIG. 19

TIME

400

401

403    404

402

# FIG. 20

410

411

412        413

(a)

RIGHT RIGHT RIGHT RIGHT RIGHT RIGHT RIGHT RIGHT
LEFT LEFT LEFT LEFT LEFT LEFT LEFT LEFT

(b)

# FIG. 21

**INTERNATIONAL SEARCH REPORT**

| International application No. |
| --- |
| PCT/JP2011/075289 |

A. CLASSIFICATION OF SUBJECT MATTER
*H04N13/02*(2006.01)i, *H04N13/04*(2006.01)i

According to International Patent Classification (IPC) or to both national classification and IPC

B. FIELDS SEARCHED

Minimum documentation searched (classification system followed by classification symbols)
H04N13/00-13/04

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2009/145426 A1 (SAMSUNG ELECTRONICS CO., LTD.),<br>03 December 2009 (03.12.2009),<br>paragraphs [30], [109], [119], [122], [177], [179], [249]; fig. 1, 2, 9, 10, 19, 20<br>& US 2009/0295907 A1 & EP 2286596 A1<br>& KR 10-2009-0123743 A & MX 2010012948 A<br>& CN 102047668 A & JP 2011-523285 A | 1-10,12-16 |
| Y | JP 2009-516447 A (Nokia Corp.),<br>16 April 2009 (16.04.2009),<br>paragraphs [0019] to [0022], [0029], [0047] to [0049]; fig. 11 to 14<br>& US 2009/0295790 A1 & EP 1952199 A1<br>& WO 2007/057497 A1 | 1-10,12-16 |

[X] Further documents are listed in the continuation of Box C.　　　[ ] See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 January, 2012 (26.01.12) | Date of mailing of the international search report<br>07 February, 2012 (07.02.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/075289

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-167064 A (Fujifilm Corp.),<br>17 July 2008 (17.07.2008),<br>paragraphs [0067] to [0071]; fig. 3<br>& US 2008/0158369 A1 | 6,10 |
| Y | JP 2004-240469 A (Sharp Corp.),<br>26 August 2004 (26.08.2004),<br>paragraphs [0058], [0068]; fig. 5<br>& JP 2008-193693 A & WO 2004/057879 A1<br>& AU 2003289341 A | 14,15 |
| A | JP 8-9421 A (Sanyo Electric Co., Ltd.),<br>12 January 1996 (12.01.1996),<br>paragraphs [0029] to [0032]; fig. 1<br>(Family: none) | 1-16 |
| A | JP 2003-209858 A (Canon Inc.),<br>25 July 2003 (25.07.2003),<br>entire text; all drawings<br>(Family: none) | 1-16 |
| A | JP 2001-142166 A (Sharp Corp.),<br>25 May 2001 (25.05.2001),<br>paragraph [0062]<br>& JP 2001-148869 A & US 6512892 B1<br>& US 6798406 B1 & GB 2354389 A<br>& GB 2354391 A & GB 9921638 D0<br>& EP 1085769 A3 & EP 1089573 A3<br>& DE 60038855 D | 1-16 |
| A | WO 2007/064159 A1 (ELECTRONICS AND<br>TELECOMMUNICATIONS RESEARCH INSTITUTE),<br>07 June 2007 (07.06.2007),<br>entire text; all drawings<br>& EP 1955554 A1 & KR 10-2007-0058302 A | 1-16 |
| A | JP 11-27703 A (Canon Inc.),<br>29 January 1999 (29.01.1999),<br>entire text; all drawings<br>(Family: none) | 1-16 |
| A | JP 10-32840 A (Matsushita Electric Industrial<br>Co., Ltd.),<br>03 February 1998 (03.02.1998),<br>entire text; all drawings<br>& JP 2003-333621 A & JP 2004-7707 A<br>& JP 2004-48725 A & US 6163337 A | 1-16 |

Form PCT/ISA/210 (continuation of second sheet) (July 2009)

**INTERNATIONAL SEARCH REPORT**

| International application No. |
|---|
| PCT/JP2011/075289 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-349736 A  (Sharp Corp.),<br>09 December 2004 (09.12.2004),<br>entire text; all drawings<br>& US 2006/0192776 A1     & US 2010/0039499 A1<br>& EP 1617684 A1          & WO 2004/093467 A1<br>& KR 10-2005-0121246 A   & CN 1774937 A<br>& CN 101841728 A | 1-16 |
| A | JP 2002-95018 A  (Canon Inc.),<br>29 March 2002 (29.03.2002),<br>paragraph [0045]<br>& US 2002/0030675 A1 | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009516447 PCT

**Non-patent literature cited in the description**

- 3DC Safety Guidelines. *3D Consortium Safety/Guidelines Section,* 20 April 2010, http://www.3dc.gr.jp/jp/scmt_wg_rep/3dc_guideJ_201 00420.p df